# EUROPEAN PATENT SPECIFICATION

(11) **EP 1 535 952 B1**
(45) Date of publication and mention of the grant of the patent: **16.01.2013**
(21) Application number: 03292972.1
(22) Date of filing: 28.11.2003
(51) Int. Cl.: C08J 3/24, C08K 5/29

(54) **Method for preparing crosslinked polyelectrolyte multilayer films**
Verfahren zur Herstellung vernetzter, mehrlagiger Polyelektrolytfilme
Procédé de préparation de films polyelectrolytes multi-couches réticulés

(43) Date of publication of application: 01.06.2005
(73) Proprietor: UNIVERSITE LOUIS PASTEUR, 67000 Strasbourg (FR); CENTRE NATIONAL DE LA RECHERCHE SCIENTIFIQUE, 75794 Paris Cedex 16 (FR); INSTITUT NATIONAL DE LA SANTE ET DE LA RECHERCHE MEDICALE, 75654 Paris Cédex 13 (FR)
(72) Inventor: Picart, Catherine, 67000 Strasbourg (FR); Voegel, Jean-Claude, 67210 Valff (FR); Frisch, Benoît, 67100 Strasbourg (FR); Schaaf, Pierre, 67120 Molsheim (FR); Decher, Gero, 77694 Kehl-Marlen (DE); Cuisinier, Frédéric, 88490 Lusse (FR)
(74) Representative: Holtz, Béatrice

(56) References cited:
- WO-A-01/58961
- US-A1- 2002 025 529
- TOMIHATA K ET AL: "CROSSLINKING OF HYALURONIC ACID WITH WATER-SOLUBLE CARBODIIMIDE" JOURNAL OF BIOMEDICAL MATERIALS RESEARCH, WILEY, NEW YORK, NY, US, vol. 37, no. 2, November 1997 (1997-11), pages 243-251, XP000965636 ISSN: 0021-9304

## Description

### Field of the invention

The invention relates to methods for preparing crosslinked polyelectrolytes multilayer films according to claim 1. The invention also relates to a method of coating a surface, and the coated surface obtained.

### Background of the invention

Among the different techniques used to modify surfaces, the deposition of polyelectrolyte multilayers (PEM) has emerged as a very easy handling and versatile tool. Based on the alternate adsorption of polycations and polyanions, this technique allows to buildup films with tunable properties : by adjusting several parameters such as the chemical nature of the polyelectrolytes, pH and ionic strength, immersion and rinsing times, post-treatment of the film, it is possible to obtain an almost infinite variety of architectures. The introduction of electrostatic layer-by-layer (LbL) self-assembly also called electrostatic self-assembly (ESA) has shown broad biotechnology and biomedical applications in thin film coating, micropatterning, nanobioreactors, artificial cells, integrated optics, microelectronic devices, sensors, optical memory devices, encapsulation and drug delivery systems. Indeed, this kind of film is very easy to manufacture.

The film architecture is precisely designed and can be controlled to 1 nm precision with a range from 1 to 150 000 nm and with a definite knowledge of its molecular composition.

Of special importance for biomedical applications is the control of the chemical composition of the surface which can affect biological activity. Films made from polypeptides i.e. poly(L-lysine), natural polyelectrolytes (eg hyaluronan, alginate, chitosan, collagen) allow, for example, biomimetic architectures to be created. Applications include also the fabrication of non adhesive barriers for vascular grafts, the fabrication of films with pro- or anti-coagulant properties or the preparation of hollow capsules for drug release. Bioactivity of the films can be achieved by their functionalization by inserting peptides associated to polyelectrolytes or through the embedding of proteins. For biomaterial applications, biocompatibility is a major requirement : the material or the film covering a material surface must be non-cytotoxic to any living cell and not iatrogenic or allergenic. Another requirement is that the material possesses chemical and physical properties that promote specific cell interactions, either cell adhesion or non-adhesion depending on the final application. In this respect, it was shown that primary cells can be grown on poly(styrenesulfonate)/poly(allyamine hydrochloride) films and on poly(L-lysine)/poly(L-glutamic acid) films for several days while maintaining their phenotype. Recently, Mendelsohn et al., Biomacromolecules, 2003, 4, 96-106, showed that poly(acrylic acid)/poly(allylamine hydrocholoride) multilayers can be either non adhesive or adhesive depending on the pH of preparation of the films. These authors suggested that the non-adhesive character of the films with respect to cells is related to their high swelling capacities and is independent of their adhesive or non-adhesive character with respect to proteins from serum.

For various applications, the preservation of the structural integrity of the film is crucial. For a long term use of these films (e.g. days, weeks, or months) in aggressive conditions (pH, ionic strength, solvents), it is important that the stability (in particular biostability) of the films is maintained. This property is particularly of interest for films designed to be in contact with a tissue or fluid within the body (soft tissue, blood, lymph, etc.) which contains different types of proteins (for example enzymes), cells and phagocytic cells (for example white blood cells). It could also be interesting to prevent certain molecules or an ensemble of molecules of the same or different types from changing the position of their deposition either by introducing individual covalent bonds for their attachment or by creating a crosslinked (multiconnected) network. The covalent coupling or crosslinking may also lead to an increased stability of the film which may be of interest.

Polyelectrolyte multilayers based on biopolymers or polyaminoacids are hydrogels and must be considered as "soft" and sensitive materials. For example, exposure to solvents, pH and ionic strength jumps can affect their structural integrity and cross-linking constitutes a possible way to stabilize them. Up to now, only few cross-linkable PEM systems have been reported. The approaches generally rely on the cross-linking through condensation reaction of complementary groups located on adjacent layer. The different strategies make use of bifunctional aldehydes such as glutaraldehyde (Brynda, E.; Houska, M. J. Colloid Interface Sci. 1996, 183, 18-25; Leporatti, S. et al, Langmuir 2000, 16, 4059-4063), incorporation of diazoresins that are subsequently exposed to UV light (Chen, J. et al, Langmuir 1999, 15, 7208-7212), and more recently, cross-linking of hybrid clay/polyelectrolyte layers using a photo-cross linkable polyelectrolyte (Vuillaume, P. Y.; Jonas, A. M.; André Laschewsky, A. Macromolecules 2002, 35, 5004-5012). Drying and subsequent heating of the films at high temperature (130°C) for several hours was also explored. Depending on the types of polyelectrolytes used, heating could produce amide bonds for poly(allylamine hydrochloride/Poly(acrylic) acid films (Harris, J. J.; DeRose, P.; Bruening, M. J. Am. Chem. Soc. 1999, 121, 1978-1979) or imide bonds for maleic acid copolymers and poly(allylamine) (Lee, B. J.; Kunitake, T. Langmuir 1994, 10, 557-562). Cross-linking not only enhances the stability of the films but allows also to change their permeability, conductivity and eventually also their viscoelastic properties. All these cross-linking methods present however also drawbacks. Introducing linker molecules such as glutaraldehyde may, for example, not only modify the film structure in a non controlled manner but also may change its biocompatibility. On the other hand, heating is not always possible depending upon the nature of the substrate.

It therefore is an object of this invention to provide a method for producing stable polyelectrolyte multilayers films.

It is a further object of the invention to provide a method of producing certain biocompatible materials, such materials presenting a surface coated with polyelectrolyte multilayers films.

Furthermore, it is an object of the invention to provide multilayers films wherein various cells types can adhere and proliferate.

The inventors have now discovered that cross-linking of poly(L-lysine)/hyaluronan (PLL/HA) and poly(L-lysine)/poly(L-glutamic) (PLL/PGA) multilayers with 1-ethyl-3-(3-dimethylaminopropyl) carbodiimide (EDC), can be of valuable interest. EDC catalyzes the formation of amide bonds between carboxylic groups of HA (or PGA) and amine groups of PLL. The cross-linking reaction will be favored by the presence of N-hydroxysulfo succinimide (NHS) (Grabarek, Z.; Gergely, J. Anal. Biochem. 1990, 185, 131-135). EDC alone has already been used for the cross-linking of hyaluronan solutions (Tomihata, K.; Ikada, Y. J Biomed Mater Res 1997, 37, 243-251) and hyaluronan/collagen sponges (Park, S.-N.; Park, J.-C.; Kim, H. O.; Song, M. J.; Suh, H. Biomaterials 2002, 23, 1205-1212).

In contrast to conventional agents, such as glutaraldehyde, carbodiimides do not remain as a part of that linkages but simply change to water soluble urea derivatives that have very low cytotoxicity.

Moreover, it has been established by the inventors that the cross-linking procedure according to the invention can be carried out on different types of polyelectrolytes, as long as carboxylic groups and amine groups are present in said polyelectrolytes. Furthermore, the cross-linking procedure according to the invention can implement other types of coupling agents, including not only carbodiimide compounds, but also peptides coupling agents, such as HOBt (N-Hydroxybenzotriazole) (Carpino, L.A. J Am Chem Soc, 1993, 115, 4397-98), BOP (Benzotriazole-1-yl-oxy-tris-dimethylamino)-phosphonium) (Castro, B., Dormoy, J.R., Evin, G. and Selve, C. Tetrahedron Lett. 1975, 1219-1222), HATU (Abdelmoty, I., Albericio, F., Carpino, A., Foxman, B.N. and Kates, S.A. Lett Pept Sc. 1994, 1, 52.), and TFFH (Carpino, L.A. and El-Faham, A. J Am Chem Soc 1995, 5401-5402). The chemical structures of HOBt, BOP, HATU, TFFH are as follows.

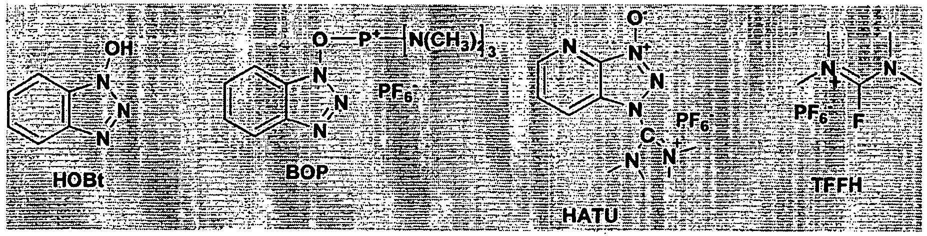

### Summary of the invention

In view of the above, an object of this invention is a method for preparing cross-linked polyelectrolyte multilayers films, wherein said method comprises the reaction of complementary reactive groups : carboxylic groups and amino groups, present in the polymers that constitute the multilayer film, in the presence of a coupling agent promoting said reaction, as to form amide bonds according to claim 1.

A further object of the invention resides in a method of coating a surface, comprising (1) sequentially depositing on a surface alternating layers of polyelectrolytes to provide a coated surface presenting complementary reactive groups: amino and carboxylic groups, wherein a first (or conversely second) polymer is a cationic polyelectrolyte and a second (or conversely first) polymer is an anionic polyelectrolyte, and (2) reacting said complementary reactive groups of the coated surface obtained according to step (1) in the presence of a coupling agent, as to form amide bonds between said complementary reactive groups.

The invention also relates to an article coated according to a method of the present invention.

The cross-linking procedure according to the invention presents the advantage of being very efficient on various types of polyelectrolyte films, whatever the nature of polyelectrolyte is, and whatever the film thickness is (for instance, from few nanometers to dozens of micrometers).

Furthermore, as a consequence of the cross-linking procedure, the films obtained are stabilized with respect to aggressive media, such as solvents, extreme pH, ionic strengths jumps, enzymes and/or phagocytic cells, and can therefore withstand numerous physical, chemical and biological stresses. This includes increased resistance against a certain medium and the exchange of this medium against another one (pH jump, change of solvent). Consequently, even the obtained thick films, although highly swollen and hydrated, may keep their stability or positional integrity.

Moreover, various cells types, in particular primary cells, including chondrocytes, osteoblasts, fibroblasts, and neurons, or tumoral cells, can adhere and proliferate normally on or in films of the invention, even on or in thick polyelectrolyte films.

### Detailed description of the invention

The polyelectrolyte multilayers comprise at least two or more layers of polyelectrolytes, each further layer having the opposite charge of the previous layer.

The polyelectrolyte multilayers films are more preferably biocompatible. In particular, such biocompatible films can render any coated surface biocompatible. Consequently, such biocompatible materials when applied to biological tissues, in particular within the body, present the advantage of not irritating the surrounding tissues, not provoking an abnormal inflammatory response and not inciting allergic or immunological reaction.

The polyelectrolyte multilayers may be constructed by different types of interactions between the polymers participating in the multilayer assembly, of special interest are interactions such as electrostatic attraction or hydrogen bridging. However, the technology described here also applies to multilayers assembled by different interactions under the condition that they present complementary functional groups that can be covalently coupled using an external coupling agent.

The polyelectrolyte multilayers comprise at least one pair of layers of cationic polyelectrolytes and anionic polyelectrolytes.

The number of layer pairs can vary in a wide range and depend on the desired thickness. In particular, the number of layer pairs can vary from 1 to 1000, preferably from 2 to 100, more preferably from 5 to 60. When a thick polyelectrolyte film is desired, the number of layer pairs can vary from 20 to 1000, preferably from 30 to 500 (in particular from 30 to 80).

As stated above, the thickness of the film is from 20 nm to 150 µm.

The complementary functional groups that can be covalently coupled using an external coupling agent are amino and carboxylic groups. In particular, the amino groups can be present in the form of hydroxylamine, hydrazide and amine functions. In particular, the carboxylic groups can be present in the form of acids, acid halide (preferably, acid chloride), acid anhydride or activated esters, such as N-hydroxysulfosuccinimide ester or n-paranitrophenyl ester.

The carboxylic groups and amino groups, used for the reaction may be present in the polyelectrolyte multilayer under different forms. In particular, they are part of the polyelectrolyte itself (attached by a covalent bond) or are not bound to the polyelectrolyte chain. To that respect, they can be introduced as free molecules during the preparation of polyelectrolyte multilayers and may be of different types such as amino-acids (glycine, β-alanine), polyethyleneglycol, or human serum albumin in PLL/PGA films.

Structures of such free molecules are given below.

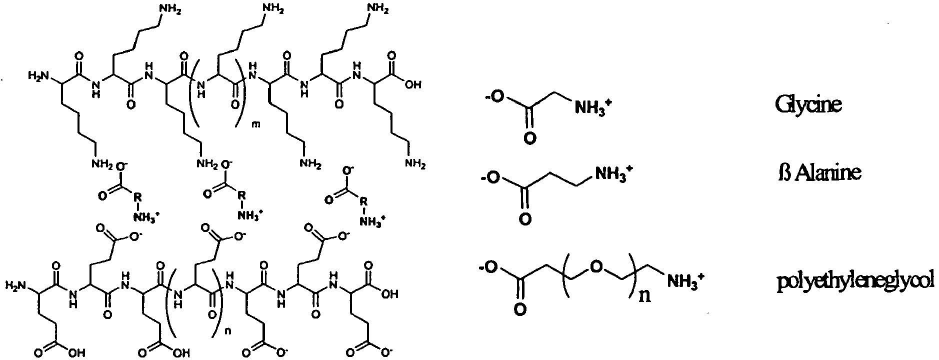

The complementary functional groups are preferably attached (in particular covalently bond) to polyelectrolytes. The complementary functional groups are either present in the native polymers or introduced by chemical modifications of the polymers.

Cationic polyelectrolytes of the polyelectrolyte multilayers comprise free amino groups and anionic polyelectrolytes of the polyelectrolyte multilayers comprise free carboxylic groups. These amino and carboxylic groups are either present in the native polymers or introduced by chemical modifications of the polymers.

Anionic polymers comprising carboxylic groups can be used in the present invention, including, without limitation thereto, poly(acrylic) acid, poly(methacrylic) acid, poly(D,L-glutamic) acid, polyuronic acid (alginic, galacturonic, glucuronic), glycosaminoglycans (hyaluronic acid, also called hyaluronan, dermatan sulphate, chondroitin sulphate, heparin, heparan sulphate, and keratan sulphate), poly(D,L-aspartic acid), any combination of the polyamino-acids, and mixtures thereof.

Cationic polymers comprising amino groups can be used in the present invention, including, without limitation thereto, poly(D,L-lysine), poly(diallydimethylammonium chloride), poly(allylamine), poly(ethylene)imine, chitosan, Poly(L-arginine), Poly(ornithine), Poly(D,L-hystidine), poly(mannoseamine) and more generally any combination of the polyamino acids, and mixtures thereof.

In a particular aspect of the invention, the cationic polymer comprising amino group is poly(L-lysine).

In a particular aspect of the invention, the anionic polymer comprising amino group is the hyaluronic acid.

In another particular aspect of the invention, the anionic polymer comprising amino group is the poly(Lrglutamic acid).

According to a particular embodiment of the invention, the polyelectrolyte multilayers can further comprise different types of polymers with different functional groups, including cationic polymers (sulfonium, phosphonium, ammonium, hydroxylamine, hydrazide such as poly(hydroxylamine) or poly(hydrazide)), anionic polymers (including poly(styrene sulfonate), poly(phosphate), polynucleic acid) and neutral polymers (including polyacrylamide, polyethylene oxyde, polyvinyl alcohol).

The molecular weight of the polymers identified above can vary in a wide range. More preferably, the molecular weight is in the range from 0.5 kDa to 20,000 kDa, even more preferably, the molecular weight is in the range from 5 to 2,000 kDa.

According to specific embodiments of the invention, the polyelectrolyte multilayers can further comprise a variety of materials, including synthetic polyions (polymers presenting ions), biopolymers such as DNA, RNA, collagen, peptides (such as a RGD sequence, Melanoma stimulating Hormone, or buforin), proteins, and enzymes, cells, viruses, dendrimers, colloids, inorganic or organic particles, dyes, vesicles, nano(micro)capsules and nano(micro)particles, polyelectrolytes complexes, free or complexed drugs, cyclodextrins, and more generally any object of interest for biological applications and mixtures thereof.

The polyelectrolyte multilayers films of the invention comprising such materials are of particular interest, since such materials comprised therein keep their functions and/or activities. For instance, RGD peptide comprised in crosslinked polyelectrolyte multilayers films maintains its activity of cell adhesion. The crosslinked polyelectrolyte multilayers films obtained according to the invention are particularly useful when they comprise materials of biological interest, in particular various cells types, such as primary cells, including chondrocytes, osteoblasts, fibroblasts, and neurons, or tumoral cells, since said cells can adhere and proliferate normally on or in films of the invention, even on or in thick polyelectrolyte films.

Such crosslinked films are indeed much more favorable in terms of early cell adhesion and proliferation of cells than the native (uncrosslinked) films.

The coupling agent is an entity, preferably a chemical entity, which enables the formation of amide bonds (or derivatives thereof) between the carboxylic and amino groups of the polyelectrolyte multilayers. The coupling agent can act as a catalyst, which can be removed thereafter, or as a reactant, which creates a spacer (or a link) within the formed amide bonds.

The coupling agents are preferably water soluble compounds.

In a particular aspect of the invention, the coupling agent is a carbodiimide compound.

The carbodiimide compounds are preferably compounds of formula (I) :

RN=C=NR' (I)

wherein R and R', which are identical or different, represent an alkyl or aryl group, preferentially an C1-C8 alkyl group.

The alkyl groups may be linear, cyclic or branched, they can be interrupted by heteroatoms, such S, N or O. In particular, they can be substituted by an amine group, such as for example -N⁺H(CH₃)₂. Examples of alkyl groups having from 1 to 8 carbon atoms inclusive are methyl, ethyl, propyl, isopropyl, t-butyl, isobutyl, n-butyl, pentyl, isopentyl, hexyl, heptyl, octyl, 2-ethylhexyl, 2-methylbutyl, 2-methylpentyl, 1-methylhexyl, 3-methylheptyl and the other isomeric forms thereof. Preferably, the alkyl groups have from 1 to 6 carbon atoms.

The aryl groups are mono-, bi- or tri-cyclic aromatic hydrocarbon systems, preferably monocyclic or bicyclic aromatic hydrocarbons containing from 6 to 18 carbon atoms, even more preferably 6 carbon atoms. Examples include phenyl, naphthyl and biphenyl groups.

The carbodiimide compounds are preferably water soluble compounds.

The carbodiimide compound according to the invention is 1-ethyl-3-(3-dimethylaminopropyl) carbodiimide (EDC).

The amount of coupling agent can vary on a wide range and depend on the desired degree of crosslinking. In general, said amount is from 5 mM to 1,2 M, preferably from 125 mM to 600 mM and more preferably from 150 mM to 250 mM.

The reaction of carboxylic groups and amino groups of the polyelectrolyte multilayers in the presence of coupling agents, in particular carbodiimide compounds (more particularly EDC), is advantageously carried out also in the presence of N-hydroxysuccinimide compounds.

The N-hydroxysuccinimide compound is preferably N-hydroxysulfo succinimide, more preferably N-hydroxysulfo succinimide para-nitrophenol, or dimethylaminopyridine.

The amount of N-hydroxysuccinimide compound can vary on a wide range. Generally, said amount is from 10 mM to 50 mM. The molar ratio coupling agent/N-hydroxysuccinimide compound is generally from 2 to 20.

The reaction of carboxylic groups and amino groups of the polyelectrolyte multilayers in the presence of carbodiimide compounds, is preferably performed in a water soluble solution, more preferably in an aqueous solution or in any kind of solvent, organic or inorganic. The aqueous solution is advantageously a salt free solution or an aqueous solution containing salts, such KCI, NaCl, or any kind of buffer such as Mes, Tris, Hepes, or phosphate buffers.

Said reaction is preferably carried out at a pH ranging from 2 to 9, more preferably from 4 to 7.5.

The cross-linking reaction can be performed over a large range of temperature from 1°C to 50°C, preferably from 4°C to 37°C, more preferably at room temperature.

The degree of crosslinking may also be controlled by varying the concentration of the coupling agent in the solution.

The present invention also relates to a method of coating a surface, comprising (1) sequentially depositing on a surface alternating layers of polyelectrolytes to provide a coated surface presenting complementary reactive groups: amino and carboxylic groups, wherein a first (or conversely second) polymer is a cationic polyelectrolyte and a second (or conversely first) polymer is an anionic polyelectrolyte, and (2) reacting said complementary reactive groups of the coated obtained surface in the presence of a coupling agent, as to form amide bonds between said complementary reactive groups.

Another aspect of the present invention relates to an article coated according to a method of the present invention. Suitable articles supporting the layer elements according to the invention are those having a surface which is preferably accessible to solvents, for example flat, cylindrical, conical, spherical or other surfaces of uniform or irregular shape. It can also include interior surfaces of bottles, tubings, beads, sponges, porous matrices and the like. The substrate material may be of any type such as glass and bioactive glass, plastic, metals (such as Titanium or others), polymers, ceramic, and more widely, any type of porous or non porous material.

In a particular aspect, the coated article according to the invention is rendered or is maintained biocompatible.

In certain embodiments, an article coated according to the method of the present invention is selected from the group consisting of blood vessel stents, tubing, angioplasty balloons, vascular graft tubing, prosthetic blood vessels, vascular shunts, heart valves, artificial heart components, pacemakers, pacemaker electrodes, pacemaker leads, ventricular assist devices, contact lenses, intraocular lenses, sponges for tissue engineering, foams for tissue engineering, matrices for tissue engineering, scaffolds for tissue engineering, biomedical membranes, dialysis membranes, cell-encapsulating membranes, drug delivery reservoirs, drug delivery matrices, drug delivery pumps, catheters, tubing, cosmetic surgery prostheses, orthopedic prostheses, dental prostheses, bone and dental implants, wound dressings, sutures, soft tissue repair meshes, percutaneous devices, diagnostic biosensors, cellular arrays, cellular networks, microfluidic devices, and protein arrays.

The surface to be coated can be at least a portion of a surface of the article such as defined above.

Sequentially depositing on a surface alternating layers of polyelectrolytes may be accomplished in a number of ways. The depositing process generally involves coating and optionally rinsing steps.

The process includes all possibilities for bringing into contact a liquid containing either a polymer or an active agent with the surface on which the film is being assembled. Step (1) usually comprises sequentially bringing a surface into contact with polyelectrolyte solutions thereby adsorbing alternated layers of polyelectrolytes to provide a coated surface presenting amino and carboxylic groups Classic methods comprise dipping, dip-coating, rinsing, dip-rinsing, spraying, inkjet printing, stamping, printing, microcontact printing, wiping, doctor blading or spin coating. Another coating process embodiment involves solely spray-coating and spray-rinsing steps. However, a number of alternatives involves various combinations of spray- and dip-coating and rinsing steps. These methods may be designed by a person having ordinary skill in the art.

One dip-coating alternative involves the steps of applying a coating of a first polyelectrolyte to a surface by immersing said surface in a first solution of a first polyelectrolyte; rinsing the surface by immersing the surface in a rinsing solution; and, optionally, drying said surface. This procedure is then repeated using a second polyelectrolyte, with the second polyelectrolyte having charges opposite of the charges of the first polyelectrolyte, in order to form a polyelectrolyte pair of layers.

This layer pairs formation process may be repeated a plurality of times in order to produce a thicker surface coating. A preferred number of layer pairs is about 1 to about 1000. A more preferred number of layer pairs is about 5 to about 60.

The thickness of the film is from 20 nm to 150 µm.

The immersion time for each of the coating and rinsing steps may vary depending on a number of factors. Preferably, contact times of the surface into the polyelectrolyte solution occurs over a period of about 1 second to 30 minutes, more preferably about 1 to 20 minutes, and most preferably about 1 to 15 minutes. Rinsing may be accomplished in one step, but a plurality of rinsing steps has been found to be quite efficient. Rinsing in a series of about 2 to 5 steps is preferred, with contact times with the rinsing solution preferably consuming about 1 to about 6 minutes.

Another embodiment of the coating process involves a series of spray coating techniques. The process generally includes the steps of applying a coating of a first polyelectrolyte to a surface by contacting the surface with a first solution of a first polyelectrolyte; rinsing the surface by spraying the surface with a rinsing solution; and, optionally, drying the surface. Similar to the dip-coating process, the spray-coating process may then be repeated with a second polyelectrolyte, with the second polyelectrolyte having charges opposite of the charges of the first polyelectrolyte.

The contacting of surface with solution, either polyelectrolyte or rinsing solution, may occur by a variety of methods. For example, the surface may be dipped into both solutions. One preferred alternative is to apply the solutions in a spray or mist form. Of course, various combinations may be envisioned, e.g., dipping the surface in the polyelectrolyte followed by spraying the rinsing solution.

The spray coating application may be accomplished via a number of methods known in the art. For example, a conventional spray coating arrangement may be used, i.e., the liquid material is sprayed by application of fluid, which may or may not be at elevated pressure, through a reduced diameter nozzle which is directed towards the deposition target.

Another spray coating technique involves the use of ultrasonic energy or electrostatic spray coating in which a charge is conveyed to the fluid or droplets to increase the efficiency of coating, A further method of atomizing liquid for spray coating involves purely mechanical energy. Still another method of producing microdroplets for spray coatings involves the use of piezoelectric elements to atomize the liquid.

Some of the previously-described techniques may be used with air assist or elevated solution pressure. In addition, a combination of two or more techniques may prove more useful with some materials and conditions.

A person having ordinary skill in the art will be able to select one or more coating methods without undue experimentation given the extensive teachings provided herein.

According to the present invention, the coating steps of the depositing process implement cationic and anionic polyelectrolytes as defined above.

According to the present invention, the obtained coated surface, which comprises polyelectrolyte multilayers, presents complementary reactive groups : amino and carboxylic groups. These groups are generally introduced within said coated surface as explained above. In particular, they are connected to polyelectrolytes, e.g. bound or not to polyelectrolytes. They can be introduced as free molecules during the preparation of polyelectrolyte multilayers, for example amino-acid such as glycine, ßalanine, and the like. They are preferably attached (in particular covalently bound) to polyelectrolytes as identified above.

Suitable solvents for polyelectrolyte solutions and rinsing solutions are: water, aqueous solutions of salts (for example NaCl, MnCl₂, (NH₄)₂ SO₄), any type of physiological buffer (Hepes, phosphate buffer, culture medium such as minimum essential medium, Mes-Tris buffer) and water-miscible, non-ionic solvents, such as C1-C4-alkanols, C3-C6-ketones including cyclohexanone, tetrahydrofuran, dioxane, dimethyl sulphoxide, ethylene glycol, propylene glycol and oligomers of ethylene glycol and propylene glycol and ethers thereof and open-chain and cyclic amides, such as dimethylformamide, dimethylacetamide, N-methylpyrrolidone and others. Polar, water-immiscible solvents, such as chloroform or methylene chloride, which can contain a portion of the abovementioned organic solvents, insofar as they are miscible with them, will only be considered in special cases. Water or solvent mixtures, one component of which is water, are preferably used. If permitted by the solubility of the polyelectrolytes implemented, only water is used as the solvent, since this simplifies the process.

According to one embodiment, step (2) as defined above can be carried out just after step (1) in the method as described above.

In an alternative method, step (1) can be followed by a deposition of another polyelectrolyte multilayer which does not present complementary reactive groups, such as amino and carboxylic groups, and step (2) as defined above is carried out thereafter.

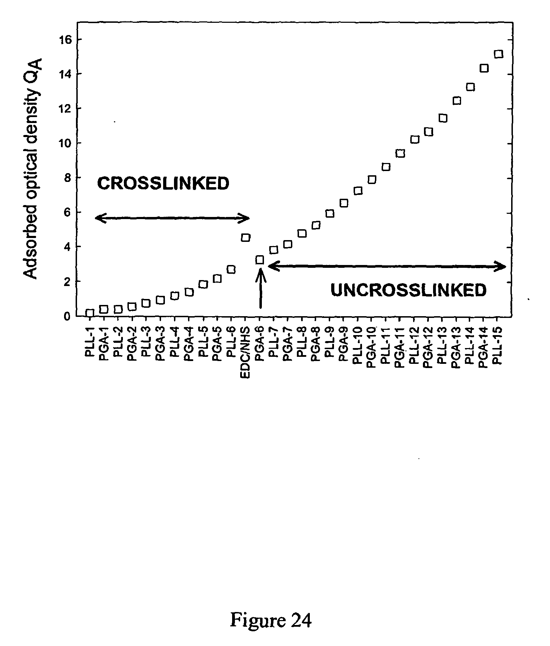

It is possible to re-build therefore a new polyelectrolyte multilayer film onto a previously crosslinked or not crosslinked film (as shown on Figure 24). This result opens possibility of creating various types of architectures, containing different « blocks » which are either non crosslinked or crosslinked. For instance, if the first part of a film is made of two different types of polyelectrolyte pairs, with the first pair containing amine and carboxylic groups, the second one containing other groups that can not be crosslinked according to the invention, for instance sulfonate groups. In this case, it is possible to deposit the cross-linking reagents on top of the whole film, coupling thereby only the part of the film that contains the carboxyl and amine groups.

The cross-linked films can also be sterilized and stored for a long period (many months) in different conditions (either dried or wet) without losing their properties. Additionally, the films exhibit good mechanical properties and can be manufactured easily.

Furthermore, a variety of materials, including synthetic polyions, biopolymers such as DNA, RNA, collagen, peptides (such as a RGD sequence, Melanoma stimulating Hormone, or buforin), proteins, and enzymes, cells, viruses, dendrimers, colloids, inorganic and organic particles, vesicles, nano(micro)capsules and nano(micro)particles, dyes, vesicles, nano(micro)capsules and nano(micro)particles, polyelectrolytes complexes, free or complexed drugs, cyclodextrins, and more generally any object of interest for biological applications and mixtures thereof, may be readily incorporated into the polyelectrolyte multilayers. Said incorporation is well known in the art and can easily be carried out by one of ordinary skill in the art. In particular, said materials may be incorporated by adsorption or diffusion, or by coupling said materials to at least one of polyelectrolytes and adsorption thereafter of said polyelectrolyte.

The polyelectrolyte multilayers films and the coated article of the invention comprising such materials are of particular interest, since such materials comprised therein keep their functions and/or activities. For instance, and more particularly, RGD peptide comprised in crosslinked polyelectrolyte multilayers films maintains its activity of cell adhesion. Moreover, as stated above and illustrated by the examples, crosslinked films comprising cells according to the invention, and also more preferably RGD peptide, are much more favorable in terms of early cell adhesion and proliferation of cells than the native (uncrosslinked) films.

Further aspects and advantages of the present invention will be disclosed in the following examples, which should be regarded as illustrative and not limiting the scope of this applications.

### LEGEND TO THE FIGURES

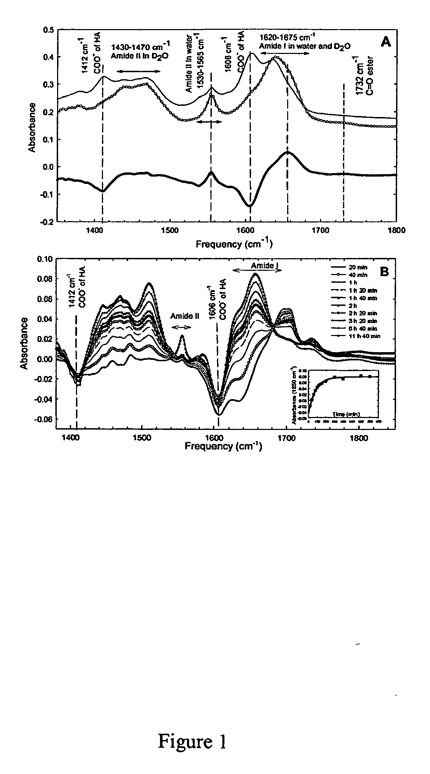

**Figure 1****.** ATR-FTIR spectra of a native and a cross-linked (PLL/HA)₈ film. (A) before (-) and after the cross-linking procedure and the final rinsing step (-o-). Cross-linking was achieved by contact with the EDC/NHS solution for 12 hours at room temperature. The difference between the two spectra (before and after cross-linking) is also represented (thick black line). (B) Evolution of the difference between the actual spectra during the contact with the EDC/NHS solution and the spectrum recorded for the (PLL/HA)₈, as a function of the contact time (from 20 min to 12 hours) (the contribution of the multilayer film was subtracted to the actual spectrum at each contact time). (*Inset*) The evolution of the absorbance at 1650 cm⁻¹ as a function of time (black square) and the corresponding exponential fit.

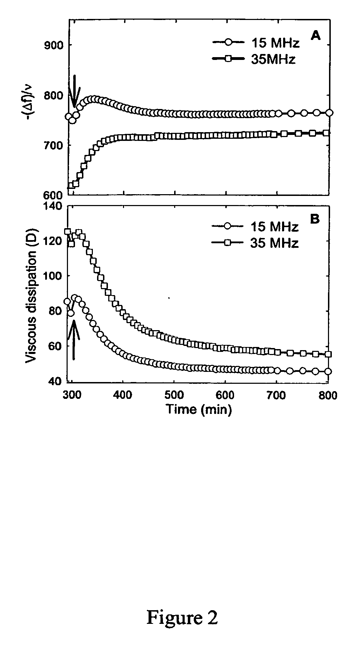

**Figure 2***. In situ* cross-linking of a (PLL/HA)₇ film as followed by QCM. (A) Evolution of the frequency shifts (-Δ*f*/*v*) and (B) of the viscous dissipation D as a function of time, after the (PLL/HA)₇ film has been put in contact with the EDC/sulfo-NHS solution. The four harmonics are represented (O) 15 MHz and ( ) 35 MHz. The arrows indicate the injection of the EDC/sulfo-NHS solution.

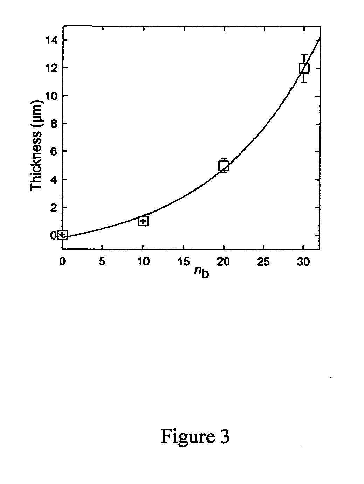

**Figure 3****.** Thickness *d* of the (PLL/HA)ᵢ films as a function of the number of pairs of layers *n*_{b}, as measured by AFM (+) and by Confocal Scanning Laser Microscopy ( ) for films built with the automatic dipping machine on 12 mm glass slides. AFM height measurements were performed by scratching the film (data taken from Picart, C.; Lavalle, P.; Hubert, P.; Cuisinier, F. J. G.; Decher, G.; P, S.; Voegel, J. C. Langmuir 2001, 17, 7414-7424) whereas CLSM measurements were performed using PLL-FITC as the last layer to label the whole film (observation of a white band corresponding to the diffusion of PLL). Error bars represent the uncertainty on the CLSM measurements.

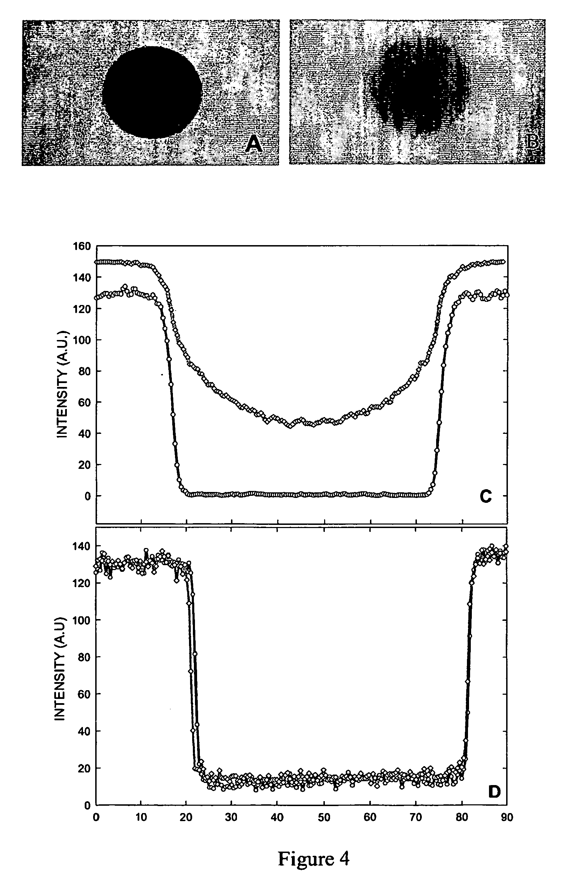

**Figure 4****.** CLSM images taken 30 min after the bleach of the circular zone (around 55 µm in diameter). The green fluorescence comes from the (PLL/HA)₂₀-PLL-FITC film. (A) native film (B) cross-linked film. The corresponding intensity profiles along the white line from images obtained immediately after the bleach (o) and 30 min after the bleach (0) are given for the (C) native and (D) cross-linked films.

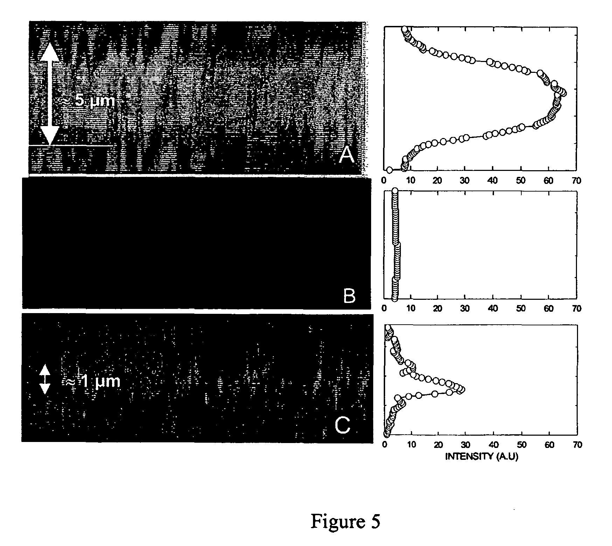

**Figure 5****.** Vertical sections through (PLL/HA)₂₀-PLL-FITC films (A) a cross-linked (PLL/HA)₂₀-PLL-FITC film for which PLL-FITC has been added before the cross-linking. The thickness of the film is around 5 µm as can be seen by the diffusion of the PLL-FITC in the film (white line, image size is 23µm x 10 µm). (B) a cross-linked (PLL/HA)₂₀ film on top of which PLL-FITC has been deposited and then rinsed. For this image, the gain and the amplification of the detector were unchanged when compared to (A) (image size is 22.5µm x 9.2 µm). (C) same sample as for image (B) but observed with the detector gain increased by a factor two. A weak green fluorescence is visible over a short distance at the top of the film (white arrow) because PLL-FITC diffuses weakly into the cross-linked film (image size is 22.5µm x 7.2 µm). However, the noise is also greatly increased as can be seen by the large number of grey pixels overall the image.

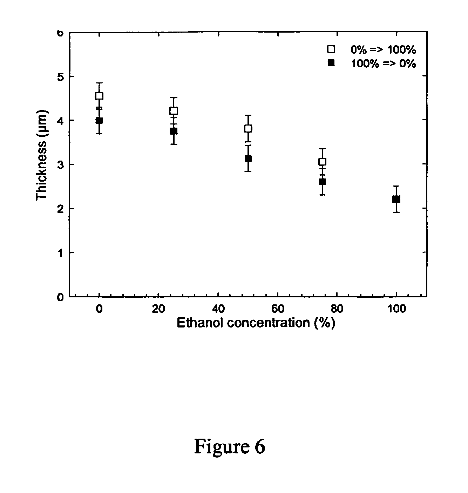

**Figure 6****.** Thickness of a cross-linked (PLL/HA)₂₀-PLL-FITC film as a function of the ethanol concentration as measured by CLSM. Films built and cross-linked in the 0.15 M NaCl solution were then put in contact with water followed by solutions at increasing ethanol concentrations (25%, 50%, 75%, 100%) ( ). The rehydration of the films was followed by decreasing ethanol concentration (from pure ethanol to pure water) (v).

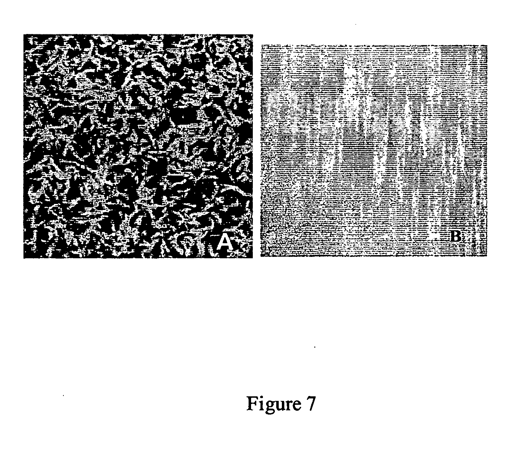

**Figure 7****.** CLSM study of the degradation of a (PLL/HA)₂₀-PLL-FITC film that has been in contact with hyaluronidase (type I, 1000U) for 42H at 37°C. (A) native and (B) cross-linked film. Z sections collected at 0.4 µm interval were taken with the 40x oil objective (230µm x 230 µm) and are compiled here into a stack (top view and vertical sections).

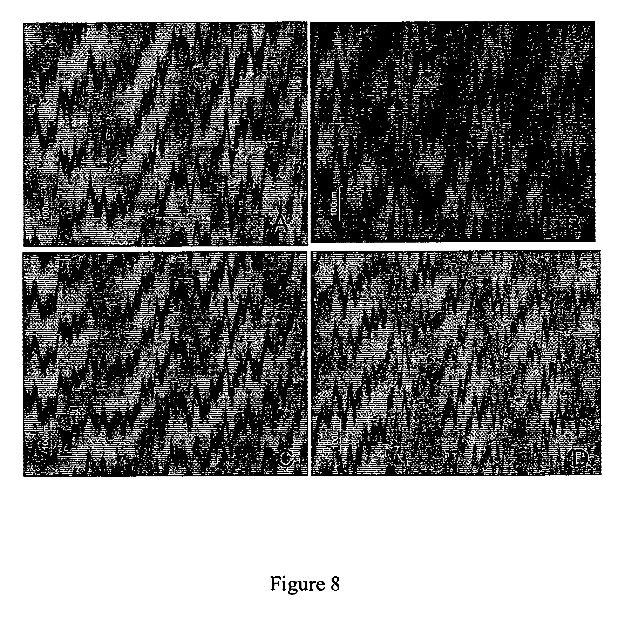

**Figure 8****.** Chondrosarcoma cells (HCS2/8) cultured on native or cross-linked (PLL/HA)₁₂ and PLL/HA)₁₂-PLL films for six days, i.e. films terminating either by ~PLL or ~HA : (A) -HA, (B) cross-linked ~HA, (C) ~PLL, (D) cross-linked ~PLL.

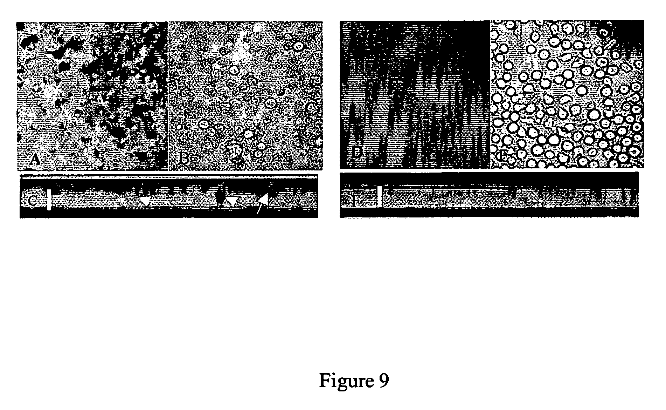

**Figure 9****.** CLSM study of the degradation of a (PLL/HA)₂₄-PLL-FITC film that has been in contact with THP-1 macrophages for 24 hours at 37°C. Top view of native film observed in fluorescence (A) and corresponding image in brightfield (B) (image size: 230µm x 230 µm). A cross-section of the native film is also shown (C). scale bar : 5 µm. Top view of a crosslinked film observed in fluorescence(D) and corresponding image in brightfield (E) (image size : 230µm x 230 µm). A cross-section of the crosslinked film is also shown (F). scale bar : 5 µm.

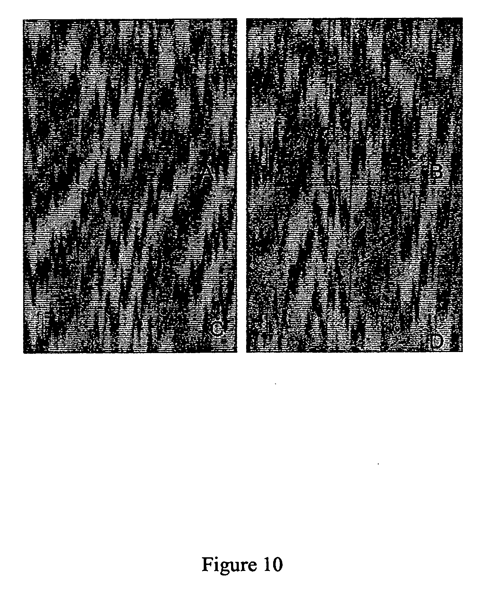

**Figure 10****.** Microscopic observation of primary chondrocytes cultured on native or cross-linked (PLL/HA)₁₂ and (PLL/HA)₁₂-PLL films for six days, ie films terminating either by ~PLL or ~HA : (A) ~HA (B) cross-linked ~HA (C) ~PLL (D) cross-linked ~PLL

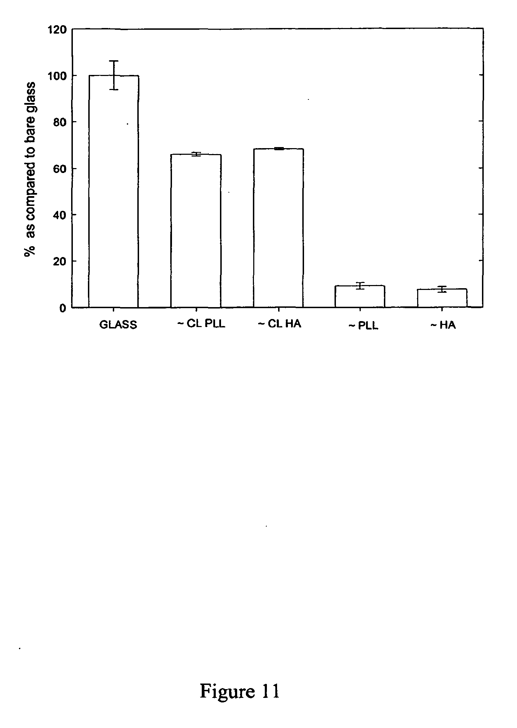

**Figure 11****.** Results of the MTT test for primary rat chondrocytes cultured on native or cross-linked (PLL/HA)₁₂ and (PLL/HA)₁₂-PLL films for six days, i.e. films terminating either by -PLL or ~HA, as compared to the results for cells grown on bare glass (value for the glass slides is put at 100%).

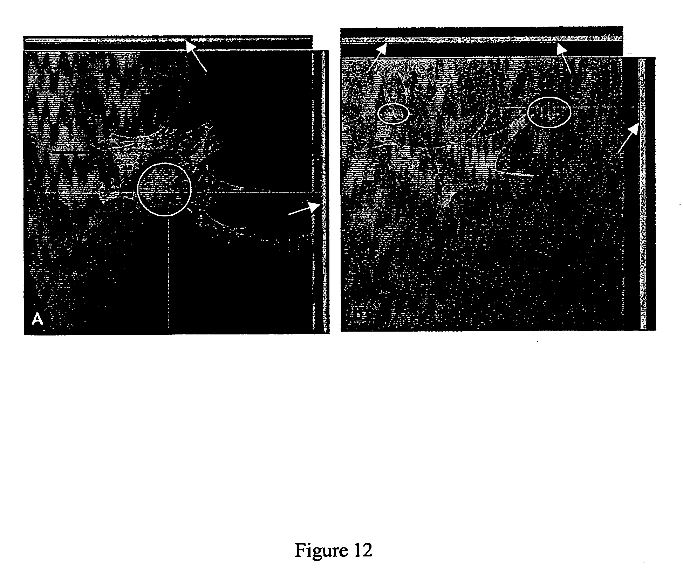

**Figure 12****.** CLSM study of the adhesion of primary chondrocytes on top of crosslinked (PLL/HA)₂₄-PLL-FITC films. For dual visualization, the film has been labeled prior to crosslinking with PLL-FITC (green) and, after two days of culture, the cells have been fixed and labeled with Rhodamin Phalloidin actin (red). (A) Focus onto the actin cables that are visible (black arrow). In the cross-sections (upper and right side views), the cell is clearly seen to anchor in the film, as shown by the presence of yellow spots (presence of both red and green fluorescence) (white arrows). (B) Focus on top of the cell. The cell appears entirely red and the cross sections (upper and right side views) show the presence of pseudopods that extend into the film down to the substrate (white arrows). For more clarity, the part of the cells that are images in the side views are circled in white. (image size : 230µm x 230 µm ; film thickness is ≈ 6 µm).

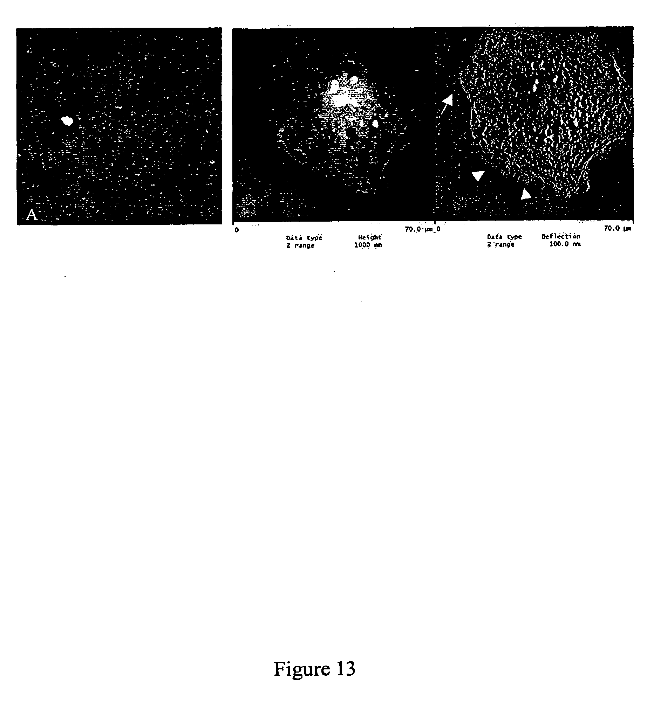

**Figure 13****.** Atomic force microscopy images of (A) a crosslinked (PLL/HA)₁₂ film (5µm x 5 µm, z range 60 nm). (B and C) a primary rat chondrocyte cultured on a cross-linked (PLL/HA)₁₂ films for two days (70 µm x 70 µm). Height image (z range = 1000 nm) (B) and (C) deflection image (z range = 100 nm). Pseudopods (white arrows) and fibrillar matrix formed by the cell are visible (arrowhead) indicating the anchoring of the cell on top of the film.

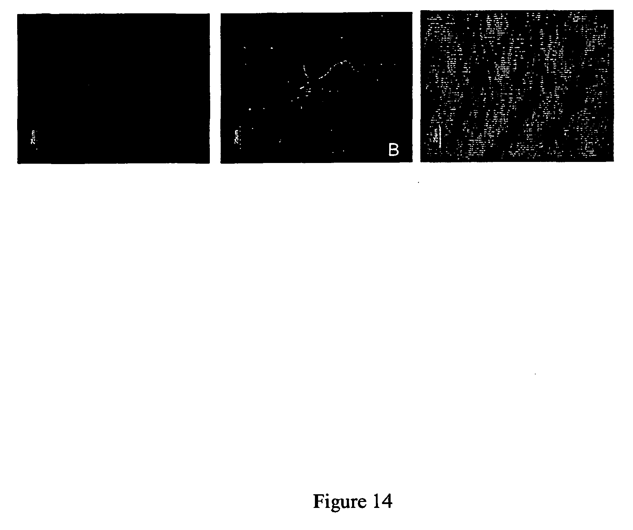

**Figure 14****.** (A) Primary motoneurons cultured for two days on native or cross-linked (PLL/HA)₁₂-PLL films and stained for β-tubulin (red). The last PLL layer was also labeled in green (PLL-FITC) (A) native film. (B) motoneurons on a cross-linked film. (C) same zone as (B) but imaged in the green channel. The upper part of the film appears entirely green. (scale = 25 µm).

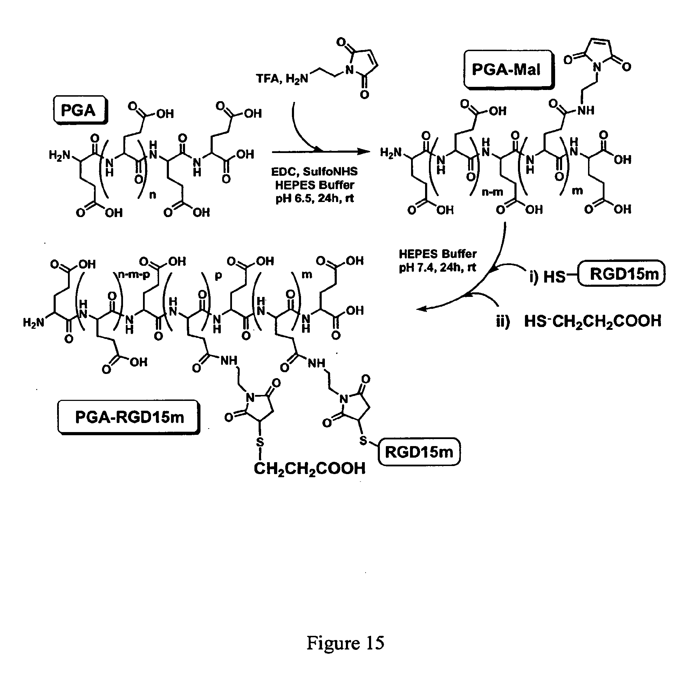

**Figure 15****.** Scheme of the synthesis of the 15 amino acid peptide that contained -RGD-sequence (PGA15m). In a first step, the PGA was conjugated to the maleimide groups (PGA-Mal). Then, the conjugated PGA-Mal was mixed with the PGD15m peptide. Mercaptopropionic acid was used to neutralize the unreacted maleimide groups. The final product contains thus both the RGD function and carboxylic sites that have a polyelectrolyte character. The grafting ratio was 10%.

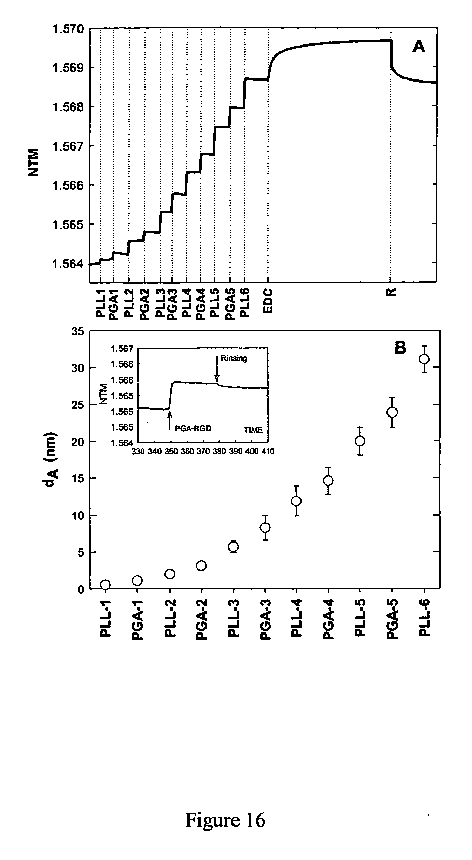

**Figure 16****.** (A) Raw N_{TM} signals obtained during the buildup of a (PLL/PGA)₅-PLL film build in a Hepes-NaCl buffer (pH = 7.4) as measured by the OWLS technique. The film was then crosslinked with the EDC/NHS buffer in 0.15 M NaCl solution at pH=5 and finally rinsed with the Hepes-NaCl buffer. (B) Mean film thickness measured for the different layers during the buildup (means ± SD of three experiments). (*inset*) : Raw signal obtained during the adsorption of PGA-RGD on top of a (PLL/PGA)₅-PLL followed by a rinsing step.

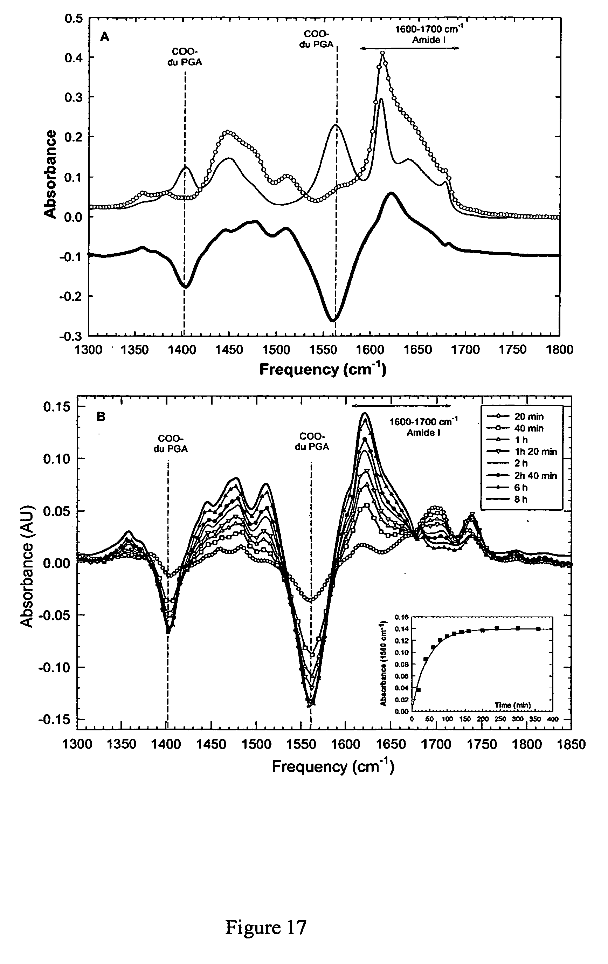

**Figure 17****.** ATR-FTIR spectra of a native and a cross-linked (PLL/PGA)₆ film. (A) before (-) and after the cross-linking procedure and the final rinsing step (-o-). Cross-linking was achieved by contact with the EDC/NHS solution for 8 hours at room temperature. The difference between the two spectra (before and after cross-linking) is also represented (thick black line). (B) Evolution of the difference between the actual spectra during the contact with the EDC/NHS solution and the spectrum recorded for the (PLL/PGA)₆, as a function of the contact time (from 20 min to 8 hours) (the contribution of the multilayer film was subtracted to the actual spectrum at each contact time). (*Inset*) The evolution of the absolute value of the absorbance at 1560 cm⁻¹ as a function of time (black square) and the corresponding exponential fit.

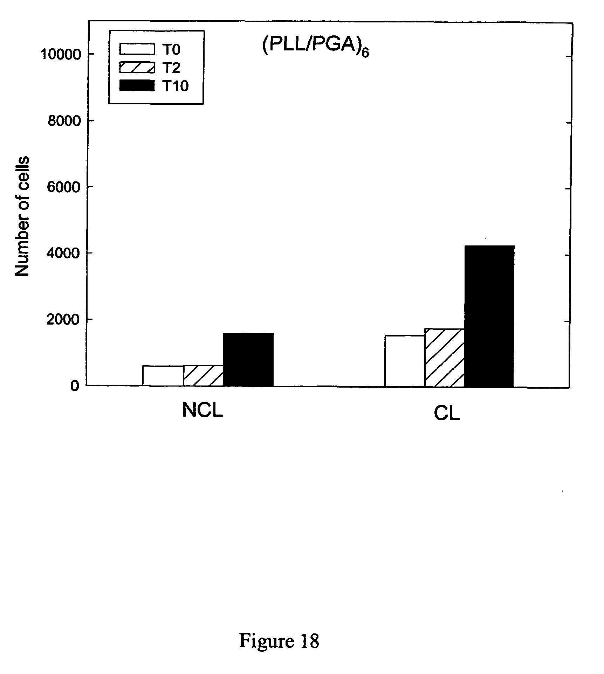

**Figure 18****.** Effect of the crosslinking on the proliferation of primary osteoblasts cells as measured by the ALP test after 0, two, or ten days of culture. (A) a native (PLL/PGA)₆ film compared to a crosslinked film

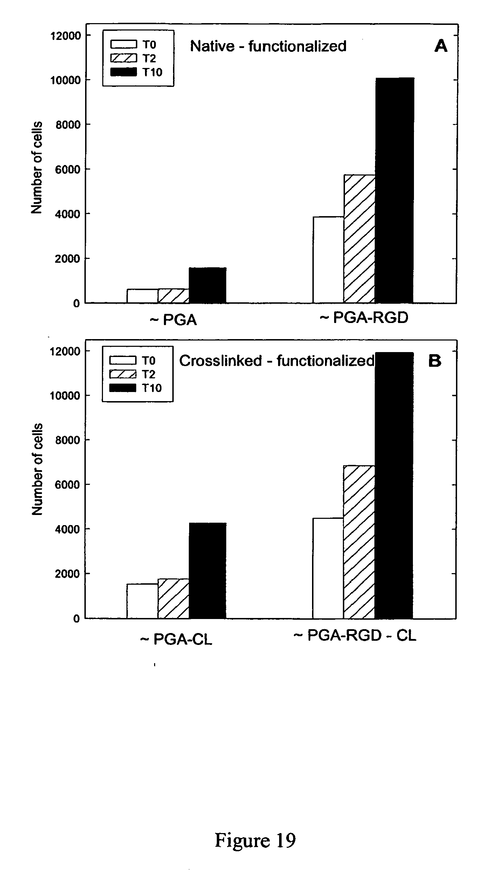

**Figure 19****.** Combined effect of crosslinking and of an RGD adhesion peptide on the proliferation of primary osteoblasts cells as measured by the ALP test after 0, two, or ten days of culture. (A) a native (PLL/PGA)₆ film compared to a native RGD fonctionalized film (PLL/PGA)₅-PLL-PGA-RGRlSmer. (B) a crosslinked (PLL/PGA)₆ film compared to a functionalized film that has been further crosslinked [ (PLL/PGA)₅-PLL-PGA-RGR15mer]- CL.

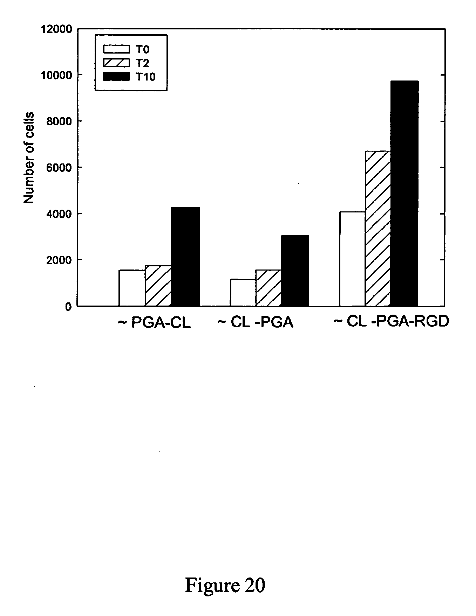

**Figure 20****.** Effect of the deposition of the last layer, either PGA or PGA-RGD15mer, on top of a crosslinked (PLL/PGA)₅-PLL film. For comparison, a crosslinked (PLL/PGA)₆ film is also shown (~PGA-CL) and is compared to a (PLL/PGA)₅-PLL-CL-PGA film ( -CL-PGA) and to a functionalized (PLL/PGA)5-PLL-CL-PGA-RGD15mer film (~CL-PGA-RGD15mer). Primary osteoblasts were grown for several days (from day 0 to day ten) on the different films.

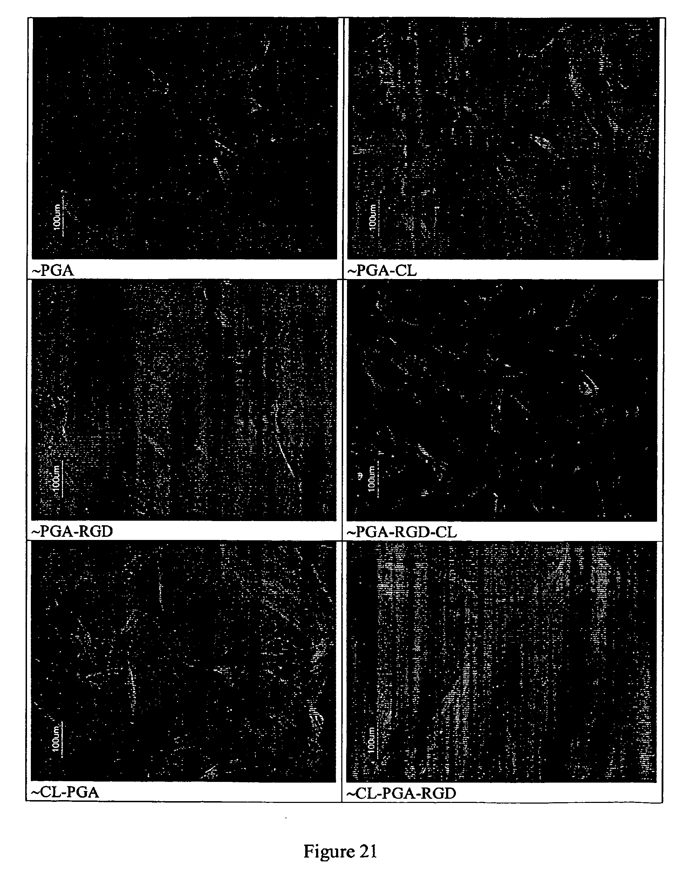

**Figure 21****.** Images of primary human osteoblasts grown on the different film architecture after three days of culture. (A) ~ PGA (B) ~PGA-CL (C) ~PGA-RGD (D) ~PGA-RGD-CL (E) CL-PGA (F) CL-PGA-RGD. (scale bar is 100 µm). Cells were stained with PKH-26.

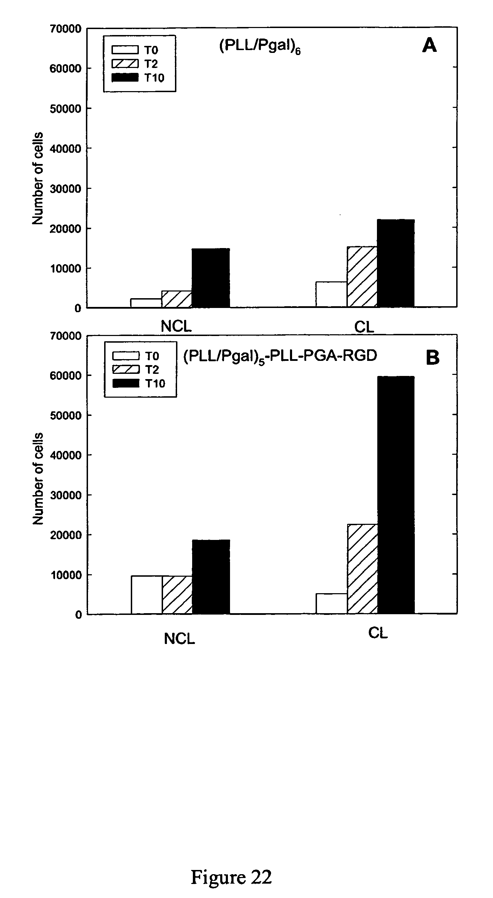

**Figure 22****.** Combined effect of crosslinking and of an RGD adhesion peptide on the proliferation of primary osteoblasts cells as measured by the ALP test after 0, two, or ten days of culture on (PLL/Poly(galacturonic acid)) (PLL/PGal) films. (A) a non crosslinked (PLL/PGal)₆ film (NCL) compared to a crosslinked (PLL/Pgal)₆ film (CL). (B) a functionalized but native [(PLL/Pgal)₅-PLL-PGA-RGD] compared to a functionalized but crosslinked [(PLL/PGA)₅-PLL-PGA-RGD-CL] film

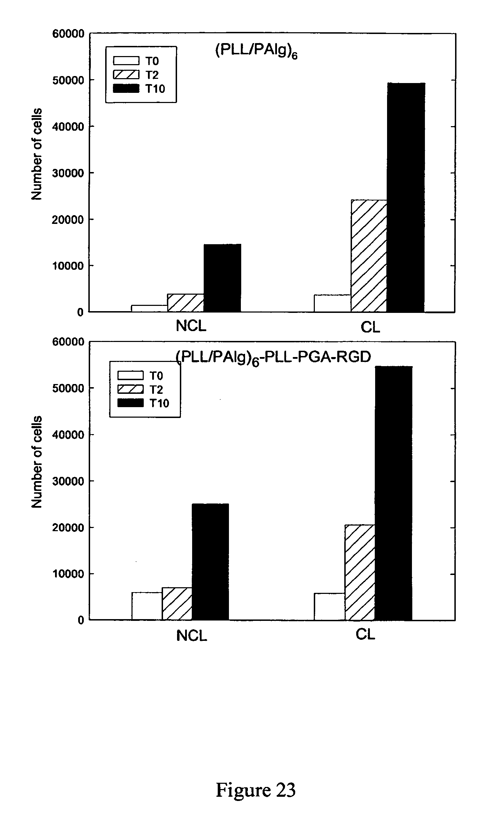

**Figure 23****.** Combined effect of crosslinking and of an RGD adhesion peptide on the proliferation of primary osteoblasts cells as measured by the ALP test after 0, two, or ten days of culture on (PLL/Poly(alginic acid)) (PLL/PAlg) films. (A) a non crosslinked (PLL/PAlg)₆ film (NCL) compared to a crosslinked (PLL/PAlg)₆ film (CL). (B) a functionalized but native [(PLL/PAlg)₅-PLL-PGA-RGD] compared to a functionalized but crosslinked [(PLLIPAlg)₅-PLL-PGA-RGD-CL] film
**Figure 24****.** Adsorbed optical density as measured by OWLS for a (PLL/PGA)ᵢ film built in a Hepes-NaCl buffer at pH=7.4. The films was crosslinked after the PLL-6 layer was deposited. Then the buildup was pursued for more than six layer pairss over the crosslinked film. This film is thus constituted of a first crosslinked part followed by a uncrosslinked one.

### EXAMPLES

### Example 1

### Materials and Methods.

**Polyelectrolyte solutions.** The preparation of solutions of poly(L-lysine) (PLL, 30 kDa, Sigma, France), hyaluronan (HA, 400 kDa, Bioiberica, Spain) and the buildup of (PLL/HA)ᵢ films was previously described in Picart, C.; Lavalle, P.; Hubert, P.; Cuisinier, F. J. G.; Decher, G.; P, S.; Voegel, J. C. Langmuir 2001, 17, 7414-7424.

PLL and HA were dissolved at 1 mg/mL in 0.15 M NaCl at pH 6-6.5. During the film construction, all the rinsing steps were performed with an aqueous solution containing 0.15 M NaCl at pH 6-6.5. Fluorescein isothiocyanate labeled PLL (PLL-FITC), 1-ethyl-3-(3-dimethylaminopropyl) carbodiimide (EDC), N-Hydroxysulfo-succinimide (sulfo-NHS), and hyaluronidase (Type I) were purchased from Sigma-Aldrich and used without any purification.

**Chemical cross-linking of the films by EDC/NHS.** Fresh solutions of EDC (400 mM) and sulfo-NHS (100 mM) were prepared in 0.15 M NaCl solution at pH 5.5. The coupling chemistry is based on the reaction of activated carboxylic sites with primary amine groups (Hermanson, G. T. In Bioconjugate techniques; Hermanson, G. T., Ed.; Academic Press: San Diego, 1996; pp 169-176). EDC reacts with available carboxyl groups to form an active O-acylisourea intermediates (step 1, scheme 1). These intermediates react with sulfo-NHS resulting in a NHS-ester activated site on a molecule (step 2, scheme 1). This NHS-ester activated site reacts with a primary amine sites to form an amide derivative (step 3, scheme 1). Failure to react with an amine results in hydrolysis of the intermediate, regeneration of the carboxyls and the release of the N-unsubstituted urea (step 4, scheme 1). It has to be noticed that the O-acylsourea intermediates can directly react with these primary amine sites (not shown). However, the O-acylsourea intermediates, like NHS-ester, are subjected to hydrolysis in aqueous solutions. In water, NHS-esters have a half-life of one to several hours, or even days (depending on temperature, pH) whereas O-acylisourea intermediates have a half-life measured in seconds. Therefore, the reaction preferentially proceeds through the longer-lived intermediates. This is the reason why the EDC/NHS reaction is more efficient than the EDC reaction alone. The cross-linking was performed on films deposited either on the ZnSe coated crystal (for FTIR experiments), on the SiO₂ crystal (for quartz crystal microbalance experiments), or on the 12 mm glass slides introduced in 24 wells culture plates. In all cases, the EDC and sulfo-NHS solutions were mixed v/v and the film coated substrate was put in contact with the mixed EDC/NHS solution for 12 hours (For clarity, the simplified notation EDC/NHS will be used instead of the complete writing EDC/sulfo-NHS). Rinsing was performed three times with a 0.15 M NaCl solution for one hour. For the FTIR experiments, a similar protocol was used except that the EDC and NHS were dissolved in a deuterated 0.15 M NaCl solution.

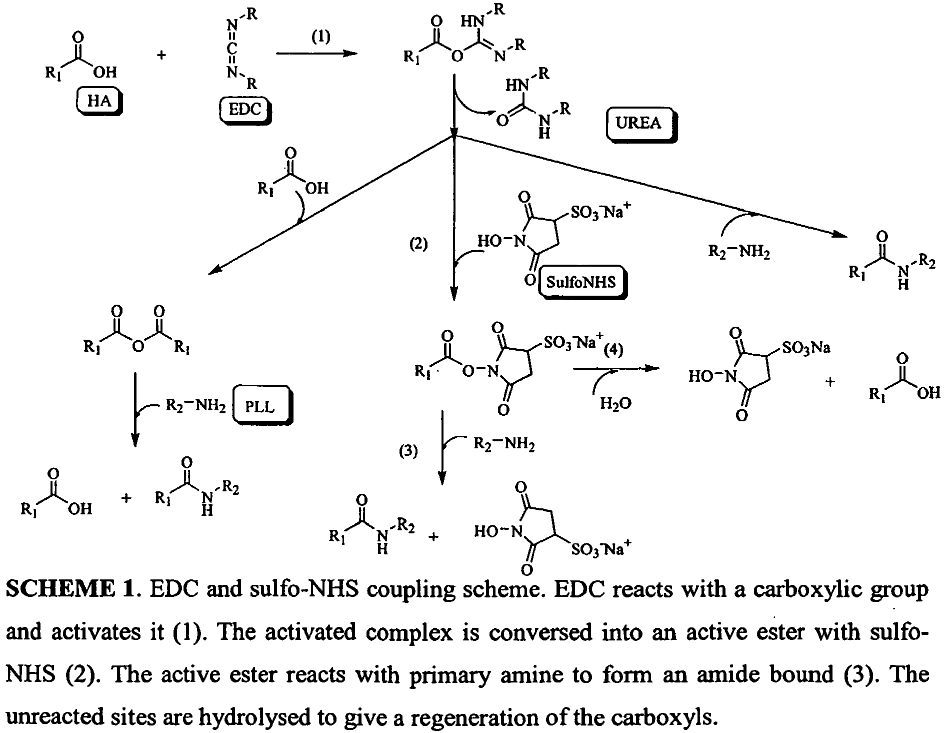

### Fourier Transform Infrared Spectroscopy in Attenuated Total Reflexion.

The film of (PLL/HA)₈ films deposited on a ZnSe crystal was investigated by *in situ* Fourier Transform Infrared (FTIR) Spectroscopy in Attenuated Total Reflection (ATR) mode with an Equinox 55 spectrophotometer (Bruker, Wissembourg, France). All the experimental details have been given previously (Schwinté, P.; Voegel, J.-C.; Picart, C.; Haikel, Y.; Schaaf, P.; Szalontai, B. J. Phys. Chem. 2001, 105, 11906 -11916). The experiments were performed in deuterated 0.15 M NaCl solution at pH ≈ 6. D₂O is used as solvent instead of water because the amide I bands of both PLL and HA are affected by the strong water band absorption around 1643 cm⁻¹ (O-H bending), whereas the corresponding vibration in D₂O is found around 1209 cm⁻¹. During the buildup, the film was continuously in contact with the 0.15M NaCl solution and was never dried. After each polyelectrolyte deposition, rinsing step and the final contact with the EDC/NHS solution, single-channel spectra from 512 interferograms were recorded between 400 and 4000 cm⁻¹ with a 2 cm⁻¹ resolution, using Blackman-Harris three-term apodization and the standard Bruker OPUS/IR software (version 3.0.4). Analysis of the raw spectrum was performed at the end of the film buildup by taking the (PLL/HA)₈ film spectrum and subtracting the contribution of the ZnSe crystal. During the contact of the (PLL/HA)₈ film with the EDC/NHS solution, single-channel spectra from 512 interferograms were recorded every 20 min. In order to follow the kinetics of the cross-linking reaction, difference spectra were calculated for a given time period by considering the actual raw spectra and subtracting to its value the contribution of the (PLL/HA)₈ film (before contact with the EDC/NHS solution).

### Quartz crystal microbalance.

The (PLL/HA)ᵢ film buildup and the cross-linking process were followed *in situ* Optical Waveguide Lightmode Spectroscopy (OWLS) (Tiefenthaler, K.; Lukosz, W. J. Opt. Soc. Am. B 1989, 6, 209-220 ; Picart, C.; Ladam, G.; Senger, B.; Voegel, J.-C.; Schaaf, P.; Cuisinier, F. J. G.; Gergely, C. J. Chem. Phys. 2001, 115, 1086-1094) and by quartz crystal microbalance-dissipation (QCM-D, Qsense, Götenborg, Sweden) (Rodahl, M.; Kasemo, B. Sens. Actuators, B 1996, B37, 111-116 ; Hook, F.; Rodahl, M.; Brzezinski, P.; Kasemo, B. J. Colloid Interface Sci. 1998, 208, 63-67). These techniques have already been described and used for the characterization of (PLL/HA); films (Picart, C.; Mutterer, J.; Richert, L.; Luo, Y.; Prestwich, G. D.; Schaaf, P.; Voegel, J.-C.; Lavalle, P. Proc. Natl. Acad. Sci. U. S. A. 2002, 99, 12531-12535). The quartz crystal is excited at its fundamental frequency (about 5 MHz) as well as at the third, fifth and seventh overtones (denoted by *v*=3, *v*=5, *v*=7 and corresponding respectively to 15, 25 and 35 MHz). Changes in the resonance frequencies Δ*f* and in the relaxation of the vibration once the excitation is stopped are measured at the four frequencies. The relaxation gives access to the dissipation *D* of the vibrational energy stored in the resonator. A decrease in Δ*f*/*v* is usually associated, in a first approximation, to an increase of the mass coupled to the quartz and a decrease of *D* at constant mass is usually associated to a stiffer (less elastic) film. Both Δ*f*/*v* and *D* at the four resonance frequencies give thus information on the viscoelastic properties of the film. After the buildup of a (PLL/HA)₇ film or a (PLL/HA)₇-PLL film, 2 mL of the EDC/NHS solution were injected in the measuring cell, left at rest for 12 hours and then rinsed. The QCM and OWLS signals were followed during the whole period.

**Automatic buildup of the polyelectrolyte multilayered films for CLSM and cell culture experiments.** For CLSM and cell culture experiments, the multilayers were prepared with a dipping machine (Dipping Robot DR3, Kierstein and Viegler GmbH, Germany) on 12 mm glass slides (VWR Scientific, France) preliminarily cleaned with 10 mM SDS and 0.1 N HCl and extensively rinsed. The glass slides were introduced vertically in a home made holder which was dipped into a polyelectrolyte solution for 10 min and was subsequently rinsed in three different beakers containing the 0.15 M NaCl solution. The slides were dipped four times (15 s each) in the first beaker and once for five minutes in the two other beakers. The slides were then dipped into the oppositely charged polyelectrolyte solution followed by the same rinsing procedure. Rinsing beakers were changed every three layers. Slides were then stored at 4°C until use in 24 wells culture plates.

### Confocal Laser Scanning Microscopy (CLSM).

PLL-FITC was used to image the dye labeled film in the green channel. The configuration of the microscope and the parameters used for the CLSM observations on a Zeiss LSM510 microscope have been given elsewhere (Picart, C.; Mutterer, J.; Richert, L.; Luo, Y.; Prestwich, G. D.; Schaaf, P.; Voegel, J.-C.; Lavalle, P. Proc. Natl. Acad. Sci. U. S. A. 2002, 99, 12531-12535). The 12 mm glass slides were introduced in a homemade chamber and observed by imaging series of consecutive overlapping optical sections. The thickness of the film was determined by the measurement of the green band (corresponding to the PLL-FITC) in computed orthogonal vertical sections through the imaged volumes. For the Fluorescence Recovery After Photobleaching experiments (FRAP), a circular zone was bleached in the center of the image by iterative illumination at 488 nm. Images were taken before, right after, and 30 min after the bleach process.

**Cell culture**. HCS-2/8 human chondrosarcoma cells derived from chondrocyte-like cell line (Tagikawa, M.; Tajama, K.; Pan, H. O.; Enmoto, M.; Kinoshita, A.; Suzuki, F.; Takano, Y.; Mori, Y. Cancer Res. 1989, 49, 3996-4002) were routinely grown in Gibco BRL's minimum essential medium with Eagle's salts (MEM, Life Technologies), 10% fetal calf serum (FCS, Life Technologies), 50 U/mL penicillin and 50 U/mL streptomycin (Bio-Whittaker) in a 5% CO₂ and 95% air atmosphere at 37°C. A flask of cells was brought into suspension after incubating for 2.5 min in 0.5% trypsin (Bio-Whittaker). Following trypsinization, cells were washed twice by centrifugation to a pellet at 500g for 5 min and resuspended in 10 mL of fresh medium containing 10% FCS with serum. The (PLL/HA)₁₂ or (PLL/HA)₁₂-PLL films, either native or cross-linked, with EDC/NHS, were deposited on 12 mm glass slide that were put in a 24 wells culture plate. These twelve layer pairss thick films were chosen such as to have a uniform film on the glass substrate as was previously checked by AFM (Picart, C.; Lavalle, P.; Hubert, P.; Cuisinier, F. J. G.; Decher, G.; P, S.; Voegel, J. C. Langmuir 2001, 17, 7414-7424). 3x10⁴ cells were deposited in each well.

### Results

### Cross-linking reaction followed by FTIR.

The cross-linking between ammonium groups of PLL and carboxylate groups of HA in the presence of EDC/NHS was first followed by FTIR-ATR. Figure 1A shows a typical spectrum of a (PLL/HA)₈ film deposited on a ZnSe crystal before contact with the EDC/NHS solution. The peaks of HA attributed to -COO⁻ asymmetric and symmetric stretches (1606, 1412 cm⁻¹ respectively) can be clearly identified (Haxaire, K.; Marechal, Y.; Milas, M.; Rinaudo, M. Biopolymers 2003, 72, 10-20). The amide I and amide II bands for HA appear respectively at 1650-1675 cm⁻¹ and 1530-1565 cm⁻¹ (in water). For PLL in D₂O, the amide I is located at 1600-1680 cm⁻¹ and the amide II band at 1450 cm⁻¹. (Boulmedais, F.; Ball, V.; Schwinte, P.; Frisch, B.; Schaaf, P.; Voegel, J. C. Langmuir 2002, 19, 440-445 ; Zuber, G.; Prestrelski, S. J.; Benedek, K. Anal. Biochem. 1992, 207, 150-156).

It has to be noticed that all the frequencies appearing in the spectra correspond closely to those found by FTIR for hyaluronan in water (Haxaire, K.; Marechal, Y.; Milas, M.; Rinaudo, M. Biopolymers 2003, 72, 10-20 ; Haxaire, K.; Marechal, Y.; Milas, M.; Rinaudo, M. Biopolymers 2003, 72, 149-161) although these experiments were performed in D₂O. This indicates that the HA constituting the multilayer is still highly hydrated. This spectrum evolves as soon as the film is brought in contact with the EDC/NHS solution. The kinetics of the cross-linking reaction emerges more clearly by following the difference between the actual spectrum and the spectrum recorded before contact with EDC/NHS. The evolutions of these difference spectra as a function of the contact time between the film and the EDC/NHS solution are shown in Figure 1B. As the contact time increases, the intensity of the peaks attributed to the carboxylic groups (1606, 1412 cm⁻¹) decreases and correlatively the intensity of the amide bands increases (1620-1680 cm⁻¹). This is a strong indication for the formation of amide bonds between PLL and HA at the expense of carboxylic groups. A stabilization of the spectra is observed after ≈ 6 hours of contact with the EDC/NHS solution (see inset of Figure 1B).

### Viscoelastic changes

The film buildup and the subsequent cross-linking were also followed *in situ* by QCM-D. As found in a previous study (Picart, C.; Lavalle, P.; Hubert, P.; Cuisinier, F. J. G.; Decher, G.; P, S.; Voegel, J. C. Langmuir 2001, 17, 7414-7424), the rescaled frequency shifts -Δ*f*/v increase exponentially (data not shown) with the number of deposition steps indicating, as a first approximation, that the mass of the film also increases exponentially. It has been shown that this exponential growth is related to the "in" and "out" diffusion of PLL through the whole film during each PLL deposition step. Moreover the values of - Δ*f*/v do depend on ν for a given number of deposition steps, indicating the viscoelastic nature of the material constituting the multilayer. When such a film is brought in contact with the EDC/NHS solution one observes a slight increase in -Δ*f*/ν and a pronounced decrease of the dissipation factor *D* for the four resonance frequencies. These changes are represented on Figure 2 for the 15 MHz and 35 MHz frequencies. The evolutions take place over roughly 5 hours. The decrease of D is characteristic of the stiffening of the film. For a thick polyelectrolyte films (thicker than the penetration depth of the evanescent field), it is also possible to determine by OWLS the film refractive index considering the film as an infinite medium (Picart, C.; Mutterer, J.; Richert, L.; Luo, Y.; Prestwich, G. D.; Schaaf, P.; Voegel, J.-C.; Lavalle, P. Proc. Natl. Acad. Sci. U S. A. 2002, 99, 12531-12535). The refractive index noticeably increases as the cross-linking is performed and it changes from 1.380 before the cross-linking to 1.395 after the cross-linking. This suggests that the film has become more dense.

### Changes in the diffusion properties of PLL.

Confocal Laser Scanning Microscopy (CLSM) was used to get information on the (PLL/HA)ᵢ film thickness and on the diffusion process through the native and crosslinked films. This technique allowed previously to prove the existence of the "in" and "out" diffusion process of PLL through the whole film during each PLL deposition step (Picart, C.; Mutterer, J.; Richert, L.; Luo, Y.; Prestwich, G. D.; Schaaf, P.; Voegel, J.-C.; Lavalle, P. Proc. Natl. Acad. Sci. U. S. A. 2002, 99, 12531-12535). It also gives access to the thickness of the films for films typically thicker than 1 µm. The use of an automatic dipping machine together with the visualization by CLSM allows to follow the thickness *d* for films made of a large number *n_{b}* of pairs of layers. As can be seen on Figure 3, the behavior of *d* with *n_{b}* is fully compatible with an exponential growth and one reaches a thickness of the order of 12 µm for 30 pairs of layers. As a supplementary experimental proof for the cross-linking of the film, fluorescence recovery after photobleaching (FRAP) experiments were performed by CLSM on uncross-linked and cross-linked (PLL/HA)₂₀-PLL-FITC films. A circular zone was bleached and images were taken immediately after the bleach and after a 30 min delay (Figure 4A and B). Intensity profiles along the X axis are plotted for the two images (Figure 4, C and D). For uncross-linked films (Fig. 5A, 5C) one observes a partial recovery of the fluorescence in the bleached zone whereas for cross-linked films no recovery is found (Fig. 5B, 5D). This indicates the absence of PLL-FITC diffusion in the cross-linked films. For non cross-linked films, the diffusion coefficient D of the PLL chains can be estimated to be of the order of <*x*²>/2.*t* = 2. 10⁻⁹ cm².s⁻¹ where x corresponds to half the width of the bleached rectangle (≈ 28 µm) and t the diffusion time (*t* ≈ 1800s). This value is largely smaller than the value of 10⁻⁷-10⁻⁸ cm².s⁻¹ estimated from the evolution of optical wave guide light mode spectroscopy data during the deposition steps of PLL as the film is built (Picart, C.; Lavalle, P.; Hubert, P.; Cuisinier, F. J. G.; Decher, G.; P, S.; Voegel, J. C. Langmuir 2001, 17, 7414-7424). The difference can be explained by the fact that the CLSM experiments were performed 24h after the film buildup. During this period of time "free" PLL-FITC chains present in the film, could exchange with PLL chains from the PLL/HA network and could gradually establish links with this network, reducing greatly their mobility.

Further evidence that cross-linking changes the internal structure of the film comes from the deposition of PLL-FITC onto a previously cross-linked but non labeled (PLL/HA)₂₀ film. Whereas a (PLL/HA)₂₀-PLL-FITC film (which has been cross-linked after the deposition of PLL-FITC) appears uniformly green (Figure 5A), there is no visible fluorescence on a cross-linked (PLL/HA)₂₀ film on top of which a PLL-FITC layer has been adsorbed using the same adjustment for the detector gain of the CLSM apparatus (Figure 5B). By increasing the detector gain by a factor of two, a very thin green line becomes visible (Figure 5C) but the noise is also greatly increased, as can be seen by the large number of green pixels overall the image (and not especially within the film). This thin line, located on the top of the film, has a thickness of the order of 1 µm which is much smaller than the ≈ 5 µm thickness of the (PLL/HA)₂₀-PLL-FITC film.

This result seems to indicate that PLL-FITC does not diffuse within the cross-linked film during the PLL-FITC deposition step. It could also be due to absence of exchange process between "free" PLL-FITC chains in the film and PLL chains cross-linked to HA and to the total diffusion (out of the film) of the PLL-FITC during the rinsing step by the aqueous solution. OWLS experiments can bring additional useful information since they were shown to evidence the diffusion of PLL within a thick (PLL/HA) multilayer film. Experiments performed by OWLS on cross-linked films evidence that there is no more signal changes when PLL and HA are adsorbed after the cross-linking procedure has been performed. This suggests that the first hypothesis is to be preferred.

### Stability of the films : uncross- linked versus cross-linked multilayers.

The stability of the non cross-linked and cross-linked films in contact with water, with different ethanol solutions and with hyaluronidase was also investigated. This enzyme is able to cleave hyaluronan (Prestwich, G. D.; Marecak, D. M.; Marecek, J. F.; Vercruysse, K. P.; Ziebell, M. R. J Control Release 1998, 53, 93-103). The non cross-linked (PLL/HA)ᵢ multilayers (built in 0.15 M NaCl solution) are stable in the 0.15M NaCl solution for several months, as checked by CLSM, and for at least two weeks when in contact with cells and culture medium (in an incubator at 37°C). On the other hand, observations performed by CLSM indicate that the films tend to lift up from the substrate locally when the multilayer is transferred from the 0.15M NaCl solution into pure water (data not shown). This may be due to strong restructuration effects inside the film or to a weakening of the interactions between the film and the substrate during the transfer of the multilayer into water. On the other hand, the cross-linked (PLL/HA)₂₀-PLL-FITC films, are very stable when transferred in water or in water/ethanol solutions whatever the ethanol proportion is. The thickness of the film as a function of the ethanol concentration is given in Figure 6. The thickness of the cross-linked film continuously decreases as the ethanol content is increased and reaches in pure ethanol a thickness which represents 50% from its initial value in water. The rehydration of the film is almost fully reversible at the 15 min time period applied here. Such a film thickness decrease as the ethanol content increases may be due to a decrease of the ionic content of the film which would lead to a decrease of the osmotic pressure. Finally, after contact for 42 hours at 37°C with a hyaluronidase solution at 1000 U/mL, the topography of a cross-linked film remained unchanged whereas uncross-linked films were strongly degraded as can be seen on Figure 7. One also observes that the degradation of uncross-linked films by hyaluronidase leads to a very porous, sponge-like film.

It has to be noticed that both native and crosslinked films can be stored for a long period of time (weeks or even months) in the refrigerator (4°C) while keeping their physico-chemical properties. Crosslinked films are also very stable in culture media at 37°C for many weeks at least.

### Cell adhesion properties.

The uncross-linked and cross-linked films were also tested with respect to the adhesion of chondrosarcoma cells, taking bare glass as a reference. These cells were grown on negative (PLL/HA)₁₂ and positive (PLL/HA)₁₂-PLL films, either native or cross-linked (four conditions). Three slides were used for each condition. On the (PLL/HA)₁₂ and (PLL/HA)₁₂-PLL films, cells neither adhere nor spread at all after two to six days of culture (Figure 8A, C). These results hold for both HA and PLL ending films. An important question arises as to whether any cells ever did initially adhere to and then subsequently detached from the polyelectrolyte films. Such behavior would suggest that the multilayers are potentially cytotoxic. However, this non-adhesion is not due to a toxicity of the films since the cells could adhere at the bottom of the well (on the plastic near the coated glass). Also, if the suspended cells from the uncross-linked PLL/HA films were transplanted to fresh culture plates, even after two days of floating, many cells readily attached and spread similarly to healthy cells. By contrast, cells deposited on the cross-linked HA and PLL ending films adhered and spread well comparably to cells on uncoated glass slides. The surface of the cross-linked film was almost entirely covered over the 6 days period of culture (Figure 8, B, D).

The change from a non-adhesive to an adhesive character of the (PLL/HA)ᵢ films after cross-linking may originate from changes in the film rigidity as evidenced by QCM-D.

Polyelectrolyte multilayered films containing carboxylic and ammonium groups can be chemically and efficiently cross-linked by means of a water soluble carbodiimide EDC in combination with sulfo NHS. Fourier transform infrared spectroscopy evidences the conversion of these groups into amide bonds. The zeta potential of the films becomes negative after the cross-linking. As a first consequence of the cross-linking, the rigidity and the density of the film are increased, as suggested by the decrease in the viscous dissipation observed by QCM and the increase in the film refractive index measured by OWLS. As a second consequence of the cross-linking, CLSM images demonstrate that the diffusion of the PLL-FITC within the (PLL/HA)ᵢ films has vanished and the cross linking hinders further diffusion of PLL chains within the film when it is brought in contact with a PLL solution. Moreover cross-linked films adhere in a much more stable way than non cross-linked ones to the substrate. Finally cross-linked films are stable in ethanol and they are not degraded by hyaluronidase (over a 42 hours incubation period at 37°C) whereas the non cross linked films are highly degraded when exposed to this enzyme. As a consequence of the cross-linking chondrosarcoma cells do adhere very well on the films terminating either with PLL or HA whereas the native films are highly cell anti-adhesive. This effect is explained by an increase of the film rigidity after cross linking.

### Example 2

### Materials and Methods.

### Cells cultures

**THP-1 macrophages.** Human promonecytic THP-1 cells (American Type Culture Collection) were maintained in Roswell Parc Memorial Institute (RPMI) 1640 medium containing 10% fetal bovine serum (FBS), 2 mM L-glutamine and antibiotics (all from Life Technologies, Paisley, UK). Differentiated THP-1 cells were obtained by treatment with 5 nM TPA for two days and then starved overnight in 0.5% FBS-RPMI in the presence of 5 nM TPA before stimulation (Jessel N, Atalar F, Lavalle P, Mutterer J, Decher G, Schaaf P, Voegel JC, Ogier G. 2003. Bioactive coatings based on polyelectrolyte multilayer architecture functionalised by embedded proteins. Adv. Mater. 15(9):692-695).

### Primary cells

**Chondrocytes proliferation.** Chondrocytes were isolated from femoral head caps and cultured as previously described (Miralles G, Baudoin R, Dumas D, Baptiste D, Hubert P, Stoltz JF, Dellacherie E, Mainard D, Netter P, Payan E. 2001. Sodium alginate sponges with or without sodium hyaluronate: in vitro engineering of cartilage. J Biomed Mater Res 57(2):268-78). ³H-thymidine uptake was used to evaluate cell proliferation. Briefly, cells were distributed into 24-well plates containing the film coated glass slides (10⁵/well/slide) in a total volume of 2ml of DMEM supplemented. The medium was changed after 3 days, then at 4 days, the cultures were pulsed with thymidine-methyl-³H (Perkin-Life Sciences, Belgium) (5µCi/ml) for 24 hours and the cells that were partially adherent were harvested by PBS washing (2ml). After washing, the adherent cells were trypsinized and lysed by frozen/unfrozen cycles. The cell lysates were transferred into liquid scintillation vials. Total radioactivity was quantified by liquid scintillation counting (Packard-Perkin Elmer, France). Data are expressed as mean percent ± SEM of cell binding, the reference being the non-coated glass slides.

**Cell viability (MTT assay).** MTT is a common assay for testing the cellular viability based on the reductive cleavage of yellow tetrazolium salt to a purple formazon compound by the dehydrogenase activity of intact mitochondria (Denizot F, Lang R. 1986. Rapid colorimetric assay for cell growth and survival : Modifications to the tetrazolium dye procedure giving improved sensitivity and reliability. J. Immunol. Methods 89(2):271-277). Consequently, this conversion only occurs in living cells. 100 µL of dye was added to the each well (in addition to the 1 mM DMEM). The film coated slides were incubated at 37°C for 4h in CO₂ incubator. The medium was gently aspirated and 300 µL of acidic propanol (500 mL propanol + 3.5 mL of 6N HCl) was added. The plates were slightly shaken for 2 hours to ensure crystal dissolution. Aliquot of 150µL from each well were put into 96-well plate and absorbances were measured into a Multiplate Reader (Biotek) at the wavelength of 550 nm and 630 nm. The difference of adsorbance (A₅₅₀ₙₘ - A₆₃₀ₙₘ) was calculated for each type of film. Mean value obtained for glass was taken as a reference (100%).

**Mouse motoneurons cultures.** Motoneurons cultures were realized as described by Martinou et al. (Martinou JC, Martinou I, Kato AC. 1992. Cholinergic differentiation factor (CDF/LIF) promotes survival of isolated rat embryonic motoneurons in vitro. Neuron 8(4):737-44) with few modifications. The spinal cords of E13 Swiss mouse embryos were dissected and incubated for 20 min at 37°C in 0.025% trypsin solution (LPCR, France). There were added with L-15 (Leibovitz) medium and mechanically dissociated by several passages through the 21 gauge needle of a syringe, and, then centrifugated at 1000g for 10 min. The pellet was resuspended in L-15 medium (containing 3.5% BSA), centrifuged again, and resuspended in L-15. They were layered over a cushion of Optiprep (Nycomed Pharma AS, Norway) and centrifuged for 15 min at 650g, at room temperature. The upper phase containing the purified motoneurons was collected, once again resuspended in L-15 medium and centrifuged at 1000g for 10 min at room temperature. The cell pellet was finally suspended in a defined culture medium made of a mixture (v/v) of Dulbecco's modified basal medium of Eagle (DMEM) and Ham F12 (Gibco-BRL, France) supplemented with 5 mg/ml insulin, 10 mg/ml human transferrin, 0.1 mM putrescein, 1 pM oestradiol, 20 nM progesterone, 300 ml of a solution of 175 mg/ml sodium selenite and glutamine 2 (Sigma). Cells were seeded with a density of 2.5x10⁴ motoneurons per well onto the (PLL/HA)₁₂ or (PLL/HA)₁₂-PLL coated glass slides. Cells were kept for 48h at 37°C in a humidified air (95%) and CO2 (5%) atmosphere. BDNF was added at a final concentration of 100 ng/ml to the culture medium. Identification and purity of motoneurons was assessed by immunolabeling with an anti-Choline acetyl transferase (ChAT) antibody. In these experiments, more than 90% of cells were positive for ChAT immunostainings.

**Fluorescent staining of the neurones.** The neurones were fixed in a mixture (95/5 v/v) of methanol and acetic acid during 10min, rinsed with PBS and permeabilized during 30 min with 0.1 % (v/v) of Triton X-100 and 3 % bovine serum albumin (BSA) (Sigma, France). They were then incubated overnight with a mouse monoclonal antibody anti-beta tubulin (1/1000, Sigma, T 4026) at room temperature. After two PBS rinses (5 min), they were incubated during 1h at room temperature in a goat anti-mouse antibody labeled with Cy3 (Interbiotech, France) diluted to the 1/800 in PBS to 0.5 % of BSA and 0.1 % of X-100 Triton.

**Confocal microscopy :** already described in example 1.

### Atomic Force Microscopy

After reaching confluence, the primary rat chondrocytes at the 2^{nd} passage were dissociated with trypsin/EDTA solution (Gibco BRL, UK) and 10⁴ cells/mL were deposited on PEM coated slides placed into 24-well plastic plates (NUNC). After 48 hours of culture, cells attached to the substrate were washed in PBS (37°C, two washes of two minutes each) and fixed for 20 minutes in 2.5% glutaraldehyde (TAAB, Berkes) in PBS at room temperature. Samples were rinsed in PBS (three washes of ten minutes each) and dehydrated in solutions with increasing ethanol content (50, 70, 90, 100 and 100%, 10 minutes each). Atomic force images were obtained in contact mode in air with the Nanoscope IIIa from Digital Instruments (Santa Barbara, CA, USA). Cantilevers with a spring constant of 0.03 N/m and with silicon nitride tips were used (Model MLCT-AUHW Park Scientific, Sunnyvale, CA, USA). Deflection and height mode images are scanned simultaneously at a fixed scan rate (between 2 and 4 Hz) with a resolution of 512 x 512 pixels. Ten cells were observed on each substrate.

### Results

Macrophages (THP-1 cells) have been deposited on top of the native and crosslinked (PLL/HA) films that had been fluorescently labeled (the last deposited PLL layer was PLL-FITC). Films containing 24 bilayers were built in order to clearly visualize them by CLSM.

After one day of culture, the macrophages have partly degraded the native film and have become fluorescent. Holes are visible in the film (Figure 9A) and the cells do exhibit some green fluorescence. This means that the macrophages have been able to digest the film. As can be seen on the side view of the film (Figure 9C), the film has been preferentially degraded in certain places that precisely correspond to the presence of the macrophages. This indicates that they have been able to digest the film and to incorporate the PLL-FITC The digestion of the PLL FITC by the macrophages can be also clearly seen (green fluorescence extending out of the film). On the other hand, the cross-linked films were not degraded at all (nor on a 48 hours time period) and the macrophages did not exhibit any fluorescence (Figure 9D). They appeared healthy and round (Figure 9E) and were highly mobile even in the time scale of the z-series acquisition (three to four minutes). The film has remained as a continuous green band (Figure 9F) of ≈6 µm in thickness and no holes in the film were visible.

Primary chondrocytes were also grown on the native and cross-linked films containing twelve layer pairs (≈ 1 µm thick) and ending either by PLL or HA. It appears that the native film are not favorable to cell adhesion. After 24 hours of culture, this can be already observed (data not shown) but is even more noticeable after 6 days of culture (Figure 10A and 10C). On the contrary, cell do adhere and proliferate well on the CL films (Figure 10B and 10D). It has to be noticed that the outermost layer of the film has no significant effect in this case. Results are similar whether it is a positive or a negative ending layer. These qualitative results are confirmed by the MTT test performed on the primary chondrocytes after six days in culture (Figure 11). By taking glass as a reference (100%), one can see that CL films are favorable to cell proliferation (73 to 77% the value of glass) as compared to uncrosslinked ones (5 to 9%). This represents a ten fold difference in the cell proliferation.

In order to better image the adhesive interactions of the primary chondrocytes with the cells, Confocal Laser Scanning Microscopy and Atomic Force Microscopy were used. For the CLSM experiments, the last PLL layer of the film has been labeled prior to crosslinking. After 48 hours of culture, the chondrocytes were fixed and their cytoskeletal actin was labeled with Texas Red. This allowed a dual visualization in both green and red channels. It has to be noticed that it was possible to observe only extremely few chondrocytes on native films after this time period due to their lack of adherence. The chondrocytes do exhibit some green fluorescence indicating that PLL has been able to diffuse over the cell surface and also to enter into the cell. The area of contact between the cell and the film is also visible (hole or deformation in the film). As can be seen in Figure 12, chondrocytes cultured on the CL films do clearly anchor in the film (see white arrows in Figure 12A and 12B). Their protusions extend far within the film down to the glass substrate. A more precise insight could be obtained by AFM.

Whereas the film appears homogenous at the dozen of nanometer scale (Figure 13A), the primary chondrocytes are able to develop pseudopods (Figure 13B, White arrow in Figure 13C) overall its membrane which are clearly visible in the micrometer range. With these pseudopods, they can anchor on top of the film. The polygonal shape of the is typical for chondrocytes.

As a last check of the radical change in the film properties when it is native or crosslinked, we extend our results to another primary cell types which is very sensitive to the environment. Toward this end, primary motoneurones were cultured on the native and CL (PLL/HA) films containing 12 layer pairs for two days. After two days in culture, they have been observed in fluorescence microscopy after labeling β-tubulin in red. As for the chondrocytes, but with an even more striking differences, there was a strong difference of behavior for neurons grown on native films and neurons grown on the CL films. Whereas the neurons on the native films could not adhere and exhibited cell death after few hours (no motoneuron could be observed by fluorescence microscopy after two day in culture), the neurons on the CL films were able to develop neurites (Figure 14).

### Example 3

### 3.1 (PLL/PGA) films

### Material and methods.

**Polyelectrolyte solutions.** Poly(L-lysine) (PLL, 30 kDa, Sigma, France) and poly(L-glutamic) acid (PGA, 55 kDa, Sigma, France) (PLL/PGA) films were built in Hepes buffer (50 mM Hepes), containing 0.15 M NaCl at 1 mg/mL (pH = 7.4). During the film construction all the rinsing steps were performed in the same buffer. 1-ethyl-3-(3-dimethylaminopropyl) carbodiimide (EDC), N-Hydroxysulfo-succinimide (sulfo-NHS) were purchased from Sigma-Aldrich and used without any purification. The 15 amino acid peptide that contained a -RGD-(Arg-Gly-Asp) sequence (CGPKGDRGDAGPKGA) derived from collagen 1 was obtained from Neosystem (Strasbourg, France) and purified by high-performance liquid chromatography. Amino-ethylmaleimide (NH₂EtMal) was prepared according to previously published procedures (Boeckler C, Dautel D, Schelte P, Frisch B, Wachsmann D, Klein JP, Schuber F. 1999. Design of highly immunogenic liposomal constructs combining structurally independent B cell and T helper cell peptide epitopes. Eur J Immunol 29(7):2297-308). For the crosslinking of the films, the protocol described in example 1 was applied. Briefly, EDC and Sulfo-NHS were always freshly prepared and dissolved in 0.15 M NaCl (pH=5) respectively at 75 mg/mL and 22 mg/mL. They were then mixed v/v just prior to the deposition of 300 µL of the EDC/NHS solution onto the PEM-coated slides. The slides were put in the refrigerator for 24 hours or at room temperature for 8 hours.

### Synthesis of PGA-RGD for film functionalization

**Synthesis of PGA-(20%)Maleimide Conjugates (****Figure 15****).** The first step of the coupling strategy was to graft maleimide groups to the PGA chains. To this end, 60 mg of PGA were dissolved in 3 ml of 10 mM Hepes Buffer (pH = 6.5) with 20 mg of EDC and 3 mg of sulfo-NHS under nitrogen and magnetic stirring. 24 mg of the amino-ethylmaleimide were added, and the reaction was kept under nitrogen and magnetic stirring at room temperature for 24 hours. After elimination of the byproducts by dialysis (cut-off 10 kDa) against 2 x 2L of deionized water, the solvent was eliminated by lyophilization. The average number of maleimide groups bound to PGA chains was determined by ¹H-NMR (Bruker DPX 300 MHz spectrometers) in D₂O, comparing the integration signal at 6.83 ppm (CH=CH, double bond of maleimide) with that at 4.25 (CH of glutamic acid). The effective degree of modification was found to be 17%. ¹H NMR (D₂O) : δ = 6.83 (s, 2H, Mal), 4.25 (m, 1H, CH), 3.58 (m,2H, C*H*₂Mal), 3.02 (m,2H, NHC*H*₂), 2.4 - 1.7 (m, 4H, C*H*₂-C*H*₂CO).

### Results

### Synthesis of PGA-(10%)-RGD (figure 15)

5 mg PGA-Maleimide were mixed with 5 mg (0.5 eq vs maleimide) of the 15 mer peptide containing the -RGD- sequence in 1.5 mL of 10 mM Hepes Buffer (pH = 7.4) under magnetic stirring at room temperature for 24 hours. An excess of mercaptopropionic acid was used to neutralize unreacted maleimide groups. Solution was dialyzed (cut-off 10 kDa) against water (2 X 2L) overnight, and lyophilised. The quantitative attachment of the 15 mer peptide was checked by ¹H-NMR in D₂O by following the disappearance of signal at 6.83 ppm (CH=CH, corresponding to the double bond of maleimide).

**Characterization of film growth by OWLS.** The (PLL/PGA)ᵢ film buildup process was followed *in situ* by optical waveguide lightmode spectroscopy (OWLS). Briefly, OWLS is sensitive to the penetration depth of an evanescent wave through the film near the waveguide surface (roughly over 200-300 nm) and gives access to the optical properties of the films (Tiefenthaler K, Lukosz W. 1989. Sensitivity of grating couplers as integrated-optical chemical sensors. Journal of the Optical Society of America B (Optical Physics) 6(2):209-220 ; Voros J, Ramsden JJ, Csucs G, Szendro I, De Paul SM, Textor M, Spencer ND. 2002. Optical grating coupler biosensors. Biomaterials 23(17):3699-3710). It has already been applied for the study of polyelectrolyte multilayer films (Picart C, Lavalle P, Hubert P, Cuisinier FJG, Decher G, P S, Voegel JC. 2001. Buildup mechanism for poly(L-lysine)/hyaluronic acid films onto a solid surface. Langmuir 17(23):7414-7424). Details about the experimental setup and the procedure can be found elsewhere (Picart C, Lavalle P, Hubert P, Cuisinier FJG, Decher G, P S, Voegel JC. 2001. Buildup mechanism for poly(L-lysine)/hyaluronic acid films onto a solid surface. Langmuir 17(23):7414-7424). For the film buildup, 100 µL of the polyelectrolyte solutions were manually injected, left at rest for 13 min, then rinsed under constant flow rate (7mL/h) for 12 min with the Hepes-NaCl solution buffer (pH = 7.4). The PGA-RGD was deposited on the same way. For the *in situ* crosslinking of the film, 5 mL of the EDC/NHS solution were prepared in NaCl (pH=5) and injected at constant flow rate within two hours. The film was then left at rest for four hours. Rinsing was achieved with the Hepes-NaCl buffer at pH = 7.4. The structure of the multilayers was analyzed using the homogeneous and isotropic monolayer model which allows the refractive index *n_{A}* and the thickness *d_{A}* to be determined (Picart *et al.* 2001, see reference cited above). Mass data are calculated according to the De Fetjer formula (De Feijter JA, Benjamins J, Veer FA. 1978. Ellipsometry as a tool to study the adsorption behavior of synthetic and biopolymers at the air-water interface. Biopolymers 17(7):1759-1772) (Adsorbed mass = (*dn*/*dc*)⁻¹ x (*n_{A}-n_{C}*) *x d_{A}* with (*dn*/*dc*) = 0.18 cm³/g and *n_{c}* = 1.3351 is the refractive index of the Hepes buffer).

**Fourier Transform Infrared Spectroscopy in Attenuated Total Reflexion.** The (PLL/PGA)₅-PLL and (PLL/PGA)₆ films deposited on a ZnSe crystal were investigated by *in situ* Fourier Transform Infrared (FTIR) Spectroscopy in Attenuated Total Reflection (ATR) mode with an Equinox 55 spectrophotometer (Bruker, Wissembourg, France). All the experimental details have been given previously (Schwinté P, Voegel J-C, Picart C, Haikel Y, Schaaf P, Szalontai B. 2001. Stabilizing effects of various polyelectrolyte multilayer films on the Structure of adsorbed/embedded fibrinogen molecules: an ATR-FTIR study. Journal of Physical Chemistry B 105(47):11906 -11916). The experiments were performed in deuterated 0.15 M NaCl solution at pH ≈ 7.4 instead of water since the amide I bands of both PLL and PGA are affected by the strong water band absorption around 1643 cm⁻¹ (O-H bending), whereas the corresponding vibration in D₂O is found around 1209 cm⁻¹. During the buildup, the film was continuously in contact with the 0.15M NaCl solution and was never dried. After each polyelectrolyte deposition, rinsing step and the final contact with the EDC/NHS solution, single-channel spectra from 512 interferograms were recorded between 400 and 4000 cm⁻¹ with a 2 cm⁻¹ resolution, using Blackman-Harris three-term apodization and the standard Bruker OPUS/IR software (version 3.0.4) (see complete description in example 1). Analysis of the raw spectrum was performed at the end of the film buildup by taking the polyelectrolyte film spectrum and subtracting the contribution of the ZnSe crystal. During the contact of the (PLL/PGA)₅-PLL (resp. (PLL/PGA)₆ ) film with the EDC/NHS solution, single-channel spectra from 512 interferograms were recorded every 20 min. In order to follow the kinetics of the cross-linking reaction, difference spectra were calculated for a given time period by considering the actual raw spectra and subtracting to its value the contribution of the (PLL/PGA)₆ film (before contact with the EDC/NHS solution).

### Primary osteoblasts (HOs) culture and cell adhesion assay.

**HOs culture.** The cells were prepared from a bone explant (with the informed consent of the patients). The bone explant was collected in DMEM medium (Life Technologies) supplemented with antibiotics (penicillin 100 U/mL, streptomycin at 100µg/mL) and washed twice in PBS. The explant was treated with 50µg/mL of collagenase I (Sigma) for 2 hours at 37°C in PBS, then washed and placed for two weeks on a Petri disch in a non mineralisation medium (0.5 mL DEM, 10% FCS and antibiotics) that was changed every four days. Osteoblasts detached from the bone explant and proliferated on the plate. Proliferating cells were washed twice in PBS, detached with 0.04% trypsin and cultivated in the non-mineralisation medium. The HOs ability to mineralize when cultivated for 25 days in a mineralisation medium (DMEM, 10% FCS, 15 mM Hepes, 1mM sodium pyruvate, 50 µg/mL vitamine C, 1.2 mM CaCl₂ and 3 mM pf β-glycerophophaste) was also checked (medium was changed every five days). Formation of phosphate deposits reflecting the mineralisation process was revealed using the Von Kossa method (McGee-Russel, 1958, Histochemistry methods for calcium. J. Histochem. Cytochem. 6:22-42, 1958**).**

### Cell adhesion and proliferation

Confluent cells were washed twice with PBS and treated with 0.04% trypsin during 5 minutes at 37°C. Detached cells were collected in PBS, centrifuged (5 min, 1000xg) and resuspended in a serum free DMEM medium supplemented with antibiotics. Cell concentration was adjusted to 2x10⁴ cells/ml and 1 ml of cells was deposed *per* well (ie per coated slide). For the adhesion test, the cells were incubated for 30 minutes at 37°C under a 5% CO₂ humidified atmosphere. After this time period (noted T0), cells were washed with 1 mL of PBS and medium was gently aspirated. 300 µl of lysis buffer (0.15 M NaCl, 3 mM NaHCO₃, pH=7.4, 0.1 % Triton X-100) was added to the well to prepare a cell extract. After 5 minutes, the cell extract was collected in a sterile tube and centrifuged during 5 minutes at 10 000 x g to pellet the insoluble materials. The supernatant was collected in a sterile tube and immediately stored at -20°C. For the proliferation assay, the cells were first let adhere for 30 min in the serum free medium. Then, the cells were carefully washed and the medium was changed to a serum containing medium (1 mL of DMEM medium supplemented with antibiotics, 10% FCS). The cells were maintained in culture at 37°C under a 5% CO2 humidified atmosphere for up to ten days (T2 and T10 correspond respectively to two and ten days). Medium was change every three days. Cells were observed with a brightfield microscope (Nikon, Eclipse TE200) and photographed using a digital camera (DXM-1200, Nikon). After a given time period, the medium was aspirated and the cells were washed with PBS. Cells were lysed according to the above protocol. The quantification of the number of cells that has adhered on each type of film was based on the alkaline phosphatase assay realized on the different cell lysates. Briefly, the samples were recovered and essayed in 96-wells culture plates with p-nitrophenyl phosphate (Sigma) as substrate in glycine NaOH buffer, pH=9.3 in a total volume of 300 µL. The absorbance was measured at regular time intervals at 405 nm on Metertech plate reader with p-nitrophenol as standard. A standard curve was drawn from reference suspensions at known cell concentrations. The test was realized only once for all the samples at the same time, at the end of the 10 days culture period.

For the cell cultures, six types of (PLL/PGA) films were investigated, either native, functionalized, or crosslinked, or both (Table 1). Three different slides were prepared per condition (i.e. 9 slides in total were prepared per condition for the three time periods T0, T2 and T10). Films were built on preliminary cleaned 14 mm diameter glass slides introduced in the 24 wells. 300 µL of fresh polyelectrolyte solutions (prepared in an autoclaved buffer) were introduced in each well, let adsorbed for 15 min and rinsed twice with 1 mL of autoclaved Hepes-NaCl buffer (5 min each). The procedure was repeated until the end of the buildup. For the PGA-RGD, the adsorption time was one hour. Prior to cell deposition, the plates were sterilized under UV light for 15 min. The cell culture tests were performed in duplicate.

**Table 1 : Types of films investigated and abbreviation used herein.**

| **Film** | **Abbreviation** |
|---|---|
| (PLL/PGA)₆ | ~PGA |
| (PLL/PGA)₆-CL | ~PGA-CL |
| [(PLL/PGA)₅-PLL-]CL-PGA | ~ CL-PGA |

| **Film containing the PGA-RGD15mer** | |
|---|---|
| (PLL/PGA)₅-PLL-PGA-RGD15mer | ~ PGA-RGD |
| [(PLL/PGA)₅-PLL-PGA-RGD15mer]CL | ~ PGA-RGD-CL |
| [(PLL/PGA)₅-PLL]CL -PGA-RGD15mer | ~ CL-PGA-RGD |

### RESULTS

### Synthesis of PGA-RGD (Figure 15)

In order to functionalize the (PLL/PGA) film by an adhesion peptide, a 15 amino acid peptide that contained the -RGD- sequence was grafted to the PGA backbone. The coupling reaction used a maleimide intermediate that was coupled via EDC/NHS chemistry. The effective grafting of the maleimide was of 17%. In a second step, the - RGD- containing peptide was coupled to the maleimide and the unreacted sites were linked to mercaptopropionic acid chains. The final grafting ratio as determined by ¹NMR was of the order of 10%.

The (PLL/PGA) film growth, the adsorption of the PGA-RGD and the crosslinking of the film were followed *in situ* by OWLS (Figure 16). The raw signal increase observed after each layer addition is representative for the buildup of the films. The signal remains stable during each rinsing step (Figure 16A). The PGA-RGD adsorption leads also to a strong increase in the signal indicating an effective adsorption. Thickness and adsorbed mass of the film could be determined by using the homogeneous and isotropic monolayer model already applied to polyelectrolyte multilayers (Picart et al., 2001, reference identified above). The thickness of the (PLL/PGA)₅-PLL films is 31.1 ± 1.8 nm (Figure 16B) with a corresponding adsorbed mass of 1.57 ± 0.16 µg/cm². Either PGA or PGA-RGD were adsorbed on top of the film. The adsorbed amount of the peptide coupled polyelectrolyte was 0.23 ± 0.04 µg/cm². The evolution of the optical signal during crosslinking was also followed by OWLS. The optical parameters deduced before and after the crosslinking are given in Table 2. Crosslinking the film lead to an increase of its refractive index indicating that the crosslinked film has a higher density that the native one. The thickness was similar but the adsorbed amount apparently increased.

**Table 2 : Optical parameters deduced from OWLS measurements for a (PLL/PGA)₅-PLL film before and after contact with the EDC/NHS solution. Also given are the differences in % between the parameters after crosslinking compared to prior crosslinking.**

| Optical parameters | PLL-6 | After EDC/NHS | Difference |
|---|---|---|---|
| n_{A} | 1.426 ± 0.009 | 1.450 ± 0.010 | 1.7% |
| d_{A} (nm) | 31.1 ± 1.9 | 31.4 ± 1.6 | 1% |
| q_{A}(µg/cm²) | 1.56 ± 0.06 | 1.98 ± 0.16 | 26.9% |

### Cross-linking reaction followed by FTIR.

The cross-linking between ammonium groups of PLL and carboxylate groups of PGA in the presence of EDC/NHS was more precisely followed by FTIR-ATR. By FTIR, carboxylate peaks and amide bands can be unambiguously identified. Figure 17A shows a typical spectrum of a (PLL/PGA)₆ film deposited on a ZnSe crystal before contact with the EDC/NHS solution. The peaks of PGA attributed to -COO⁻ asymmetric and symmetric stretches (1560 and 1400 cm⁻¹ respectively) can be clearly identified (Lenormant H, Baudras A, Blout ER. 1958. Reversible Configurational Changes in Sodium Poly-,L-glutamate Induced by Waterl. Journal of the American Chemical Society 80(23):6191-6195). The amide I band for both PGA and PLL in D₂O appears in the region 1600-1700 cm⁻¹ (Jackson M, Haris PI, Chapman D. 1989. Conformational transitions in poly(L-lysine): studies using Fourier transform infrared spectroscopy. Biochimica et Biophysica Acta 998:75-79; Lenormant *et al.* 1958 : reference identified above) in case of polyelectrolyte complexes in solution but also for polylectrolytes deposited in a layer by layer form onto a substrate (Boulmedais F, Schwinte P, Gergely C, Voegel JC, Schaaf P. 2002. Secondary structure of polypeptide multilayer films: An example of locally ordered polyelectrolyte multilayers. Langmuir 18(11):4523-4525).

This spectrum evolves as soon as the film is brought in contact with the EDC/NHS solution. The kinetics of the cross-linking reaction emerges more clearly by following the difference between the actual spectrum and the spectrum recorded before contact with EDC/NHS. The evolutions of these difference spectra as a function of the contact time between the film and the EDC/NHS solution are shown in Figure 17B. As the contact time increases, the intensity of the peaks attributed to the carboxylic groups (1560, 1400 cm⁻¹) decreases and correlatively the intensity of the amide bands increases (1600-1700 cm⁻¹). This is a strong indication for the formation of amide bonds between PLL and PGA at the expense of carboxylic groups. A stabilization of the spectra is observed after ≈ 3 hours of contact with the EDC/NHS solution (see inset of Figure 18B). This time is much lower that that found for (PLL/HA)₈ films (see example 1 and Figure 1). However, these latter films were much thicker (1 µm) than the ≈ 35 nm thick (PLL/PGA)₆ films.

### Cell adhesion and proliferation on functionalized and CL films

Cell adhesion at short time (30 min) and cell proliferation over a ten days period were also evaluated. The percentage of cell that remain adherent after 30 min of contact with the different films are given in Table 3. The lower adhesion was observed for the native (PLL/PGA)6 films. Crosslinking the film increases by a factor of three the adhesion, but adhesion is higher for films that hare crosslinked at the end of the buildup - PGA-CL as compared to prior the last deposited PGA layer ~ CL-PGA (increase by a factor two compared to native films). When the PGA-RGD is deposited as the last layer, adhesion is increased more than sixfold as compared to native films. Crosslinking the PGA-RGD ending film enhances the initial adhesion but, once again, preferably when the film is crosslinked as the end of the buildup (~ PGA-RGD-CL) as compared to prior the PGA-RGD deposition (~ CL-PGA-RGD).
It has also to be noticed that it is possible to build "mixed" films comprised of a first crosslinked part and a second uncrosslinked.

Over ten days of culture, osteoblast proliferation was poor on the native films. On the other hand, cross-linking the films leads to a three fold increase of the number of cells (after 10 days of proliferation) on the films, as compared to the non cross linked ones (Figure 18). The functionalization of the films by the RGD-peptide increased the number of cells compared to the native films (Figure 19A).

Both native and functionalized film were crosslinked in order to verify whether the activity of the peptide was maintained when the film was crosslinked at the end of the buildup, after the deposition of the RGD peptide (Figure 19B). It appeared non only that crosslinking favors cell adhesion on the native films but it also increases early cell adhesion on the RGD functionalized films (Table 3). The early adhesion is even slightly higher for the RGD functionalized and CL films than for the RGD functionalized films aloe (44.8% versus 38.7%). This clearly proves that the activity of the peptide is preserved upon crosslinking.
Noticeably, the combined effect of RGD and crosslinking was very good in term of proliferation (Figure 19B).
The influence of the outermost layer for negatively ending films was also examined. Toward this end, crosslinked PGA ending film were compared to crosslinked (PLL/PGA)₆-PLL films on top of which a last PGA or PGA-RGD layer has been deposited (Figure 20). In the case where crosslinking is performed prior to the last PGA layer deposition, early cell adhesion is slightly lower than when the film is crosslinked at the end of the buildup. The same results holds for the PGA-RGD ending films. (Table 3).

**Table 3 : Comparison of the early cell adhesion (at 30 min of contact) and ratio of proliferation for the different films tested. Cell adhesion is given as the percentage of cells remaining on the film after a thorough wash (the number of cell seeded was 2x10⁴ cells per well).**

| **Type of film** | **% of adhesion at 30 min** |
|---|---|
| ~ PGA | 6.0 |
| ~ PGA-CL | 15.4 |
| ~ CL-PGA | 11.6 |

| Films containing the RGD peptide | |
|---|---|
| ~ PGA-RGD | 38.7 |
| ~ PGA-RGD-CL | 44.9 |
| ~ CL-PGA-RGD | 40.8 |

Beside the cell proliferation assay, the cells cultures on the different film architectures have been observed after several days in culture (Figure 21). The images confirm the results obtained by the ALP test. Cells culture on the native PGA films are poorly adherent (Figure 21A). Cells cultured on both cross-linked and functionalized film are very well spread (Figure 21D). The crosslinked film and the RGD functionalized film lead also to a good adhesion (Figure 21 B,C,E,F).

Stability of the (PLL/PGA) films. Both native and crosslinked films can be stored for a long period of time (weeks or even months) in the refrigerator (4°C) while keeping their physico-chemical properties. Crosslinked films are also very stable in culture media at 37°C for, at least, many weeks.

As a conclusion, one can point out that the most favorable conditions for the initial osteoblast adhesion and proliferation are obtained for the films ending by the PGA-RGD that have been subsequently crosslinked. This clearly shows that the activity of the peptide is not inhibited by the crosslinking and that the amide bounds resulting from the crosslinking are mainly formed between the carboxylic groups of the PGA and the amine groups of PLL.

Also, an important finding is that it is preferable to crosslink at the end of the buildup in order to get better results in term of early cell adhesion. Just by adding a single additional layer can lead to a slight decrease in cell adhesion as compared to crosslinked films (this is valid for both PGA and PGA-RGD containing films). This finding may originate from the "softness" of the outermost PGA layer as compared to a more rigid one into the crosslinked film. Recent works on cell adhesion on substrates with different stiffnesses have shown the influence of the rigidity of the underlying substrate on cell adhesion (Flanagan LA, Ju YE, Marg B, Osterfield M, Janmey PA. 2002. Neurite branching on deformable substrates. Neuroreport 13(18):2411-2415; Pelham RJ, Jr, Wang Yl. 1997. Cell locomotion and focal adhesions are regulated by substrate flexibility. Proceedings of the National Academy of Sciences of the United States of America 94(25):13661-13665). Although the whole rigidity is probably only slightly affected by a single layer deposition, the surface viscosity of the film may be changed thereby affecting the cell adhesive properties.

### Application of the crosslinking protocol to different polyelectrolyte multilayers :

The combined effect of cross-linking and of the peptide was also investigated on poly(L-lysine) / alginic acid (PLL/Palg) films and poly(L-lysine)/poly(galacturonic acid) (PLL/Pgal) films for primary cells cultures. Once again, the crosslinked films are much more favorable in terms of early cell adhesion (Table 1) and proliferation (Figure 22 and Figure 23) than the native films.

**Table 4 : Comparison of the early cell adhesion (at 30 min of contact) and ratio of proliferation for different films based on Poly(Galacturonic acid) (PLL/PGal) and Poly(Alginic acid) (PLL/PAlg). Cell adhesion is given as the percentage of cells remaining after 30 min of contact on the film (the number of cell seeded was 2x10⁴ cells per well).**

| **Type of film** | **% of adhesion at 30 min** |
|---|---|
| Films based on Polv(Galacturonic acid) (PLL/PGal) | |
| ~ Pgal | 11.2 |
| ~ PGal -CL | 32 |
| (PLL/PGal)₆ -PLL-PGA-RGD | 48 |
| (PLL/PGal)₆ -PLL-PGA-RGD -CL | 25 |

| Films based on Poly(alginic acid) (PLL/Palg) | |
|---|---|
| ~ Palg | 7.2 |
| ~ PAlg -CL | 18.2 |
| (PLL/PAlg)₆ -PLL-PGA-RGD | 29.8 |
| (PLL/Pgal)₆ -PLL-PGA-RGD-CL | 29.1 |

Interestingly, additional layer pairs can be deposited on top of a crosslinked film (Figure 24).

## Claims

1. A method for preparing cross-lbked polyelectrolyte multilayers films having a thickness from 20 nm to 150 µm, wherein said method comprises the reaction of complementary functional groups : carboxylic groups and amino groups, present in the polymers that constitute the multilayer film, in the presence of a coupling agent and in the presence of N-hydroxysuccinimide compounds, as to form amide bonds, wherein said polymers that constitute the multilayer film consist of anionic polymers comprising said carboxylic groups and cationic polymers comprising said amino groups, and wherein said anionic polymers are selected in the group consisting of polyacrylic acid, polymethacrylic acid, poly(D,L-glutamic) acid, polyuronic acid, glycosaminoglycans, poly(D,L-aspartic acid), and mixtures thereof, and said cationic polymers are selected in the group consisting of poly(D,L-lysine), poly(diallyldimethylammonium chloride), poly(allylamine), poly(ethylene)imine, chitosan, Poly(L-arginine), Poly(ornithine), Poly(D,L-histidine), poly(mannoseamine) and mixtures thereof,
wherein said coupling agent is 1-ethyl-3-(3-dimethylaminopropyl)carbodiimide (EDC),

2. A method according to claim 1, wherein the used polyelectrolyte multilayers are assembled via any complementary interaction, especially electrostatic attraction and hydrogen bridging.

3. A method according to one of the preceding claims, wherein the polyelectrolyte multilayers films are biocompatible.

4. A method according to one of the preceding claims, wherein said polyelectrolyte multilayers comprise at least one layer pair of cationic polymers and anionic polymers.

5. A method according to one of the preceding claims, wherein said polyelectrolyte multilayers comprise at least one layer pair of cationic polymers and anionic polymers and the number of said layer pairs is from 1 to 1000, preferably from 2 to 100, more preferably from 5 to 60.

6. A method according to one of the preceding claims, wherein the polyelectrolyte multilayers can further comprise polymers with different functional groups selected from cationic, anionic and neutral polymers.

7. A method according to one of the preceding claims, wherein the polyelectrolyte multilayers further comprise a variety of materials selected from synthetic polyions, biopolymers such as DNA, RNA, collagen, peptides, proteins, and enzymes, cells, viruses, dendrimers, colloids, inorganic and organic particles, dyes, vesicles, nano(or micro)capsules, nano(or micro)particles, polyelectrolytes complexes, free or complexed drugs, cyclodextrins, and mixtures thereof.

8. A method according to one of the preceding claims, wherein the N-hydroxysuccinimide compound is N-hydroxysulfo succinimide.

9. A method of coating a surface, comprising (1) sequentially depositing on a surface alternating layers of polyelectrolytes to provide a coated surface presenting complementary reactive groups: amino and carboxylic groups, wherein a first (or conversely second) polymer is a cationic polyelectrolyte and a second (or conversely first) polymer is an anionic polyelectrolyte, and (2) reacting said complementary reactive groups of the coated surface by implementing the method according to anyone of the preceding claims.

10. A method according to claim 9, wherein depositing on a surface alternating layers of polyelectrolytes includes dipping, dip-coating, rinsing, dip-rinsing, spraying, inkjet printing, stamping, printing and microcontact printing, wiping, doctor blading or spin coating.

11. A method according to one of the preceding claims 9-10, wherein the depositing process involves coating and rinsing steps.

12. A method according to any one of claims 9-11, wherein the coated surface further comprises a variety of materials selected from synthetic polyions, biopolymers such as DNA, RNA, collagen, peptides, proteins, and enzymes, cells, viruses, dendrimers, colloids, inorganic or organic particles, dyes, vesicles, nano(micro)capsules and nano(micro)particles, polyelectrolytes complexes, free or complexed drugs, cyclodextrins, and mixtures thereof.

13. An article coated by a method according to any one of the claims 9-12.

14. A coated article according to claim 13, wherein said coated article is biocompatible.

15. A coated article according to claim 13 or 14, wherein said article is selected from the group consisting of blood vessel stents, angioplasty balloons, vascular graft tubing, prosthetic blood vessels, vascular shunts, heart valves, artificial heart components, pacemakers, pacemaker electrodes, pacemaker leads, ventricular assist devices, contact lenses, intraocular lenses, sponges for tissue engineering, foams for tissue engineering, matrices for tissue engineering, scaffolds for tissue engineering, biomedical membranes, dialysis membranes, cell-encapsulating membranes, drug delivery reservoirs, drug delivery matrices, drug delivery pumps, catheters, tubing, cosmetic surgery prostheses, orthopedic prostheses, dental prostheses, bone and dental implant, wound dressings, sutures, soft tissue repair meshes, percutaneous devices, diagnostic biosensors, cellular arrays, cellular networks, microfluidic devices, and protein arrays.

## Patentansprüche

1. Ein Verfahren zum Herstellen von vernetzten Polyelektrolyt-Mehrfachschichtfolien mit einer Dicke von 20nm bis 150 µm, wobei das Verfahren das Umsetzen von komplementären funktionellen Gruppen, nämlich Carboxylgruppen und Aminogruppen, die in den Polymeren vorhanden sind, die die Mehrfachschichtfolie bilden, in Anwesenheit eines Kopplungsmittels und in Anwesenheit von N-Hydroxysuccinimidverbindungen, um Amidbindungen zu bilden, umfasst, wobei die Polymere, die die Mehrfachschiciutfolie bilden, aus anionischen Polymeren, die die Carboxylgruppen umfassen, und kationischen Polymeren, die die Aminogruppen umfassen, bestehen, und wobei die anionischen Polymere aus der Gruppe bestehend aus Polyacrylsäure, Polymethacrylsäure, Poly(D,L-Glutamin)säure, Polyuronsäure, Glykosaminoglykanen, Poly(D,L-Asparaginsäure) und Mischungen davon ausgewählt werden, und die kationischen Polymere aus der Gruppe bestehend aus Poly(D,L-Lysin), Poly(diallyldimethylammoniumchlorid), Poly(allylamin), Poly(ethylen)imin, Chitosan, Poly(L-Arginin), Poly(ornithin), Poly(D, L-Histidin), Poly(Mannosamin) und Mischungen davon ausgewählt werden,
wobei das Kopplungsmittel 1-Ethyl-3-(3-dimethylaminopropyl)carbodiimid (EDC) ist.

2. Ein Verfahren gemäß Anspruch 1, wobei die verwendeten Polyelektrolyt-Mehrfachschichten mittels irgendeiner komplementären Interaktior, insbesondere durch elektrostatische Anziehung und das Bilden von Wasserstoffbrückenbindungen zusammengesetzt werden.

3. Ein Verfahren gemäß einem der vorhergehenden Ansprüche, wobei die Polyelektrolyt-Mehrfachschichtfolien biokompatibel sind.

4. Ein Verfahren gemäß einem der vorhergehenden Ansprüche, wobei die Polyelektrolyt-Mehrfachschichten mindestens ein Schichtpaar kationischer Polymere und anionischer Polymere umfassen.

5. Ein Verfahren gemäß einem der vorhergehenden Ansprüche, wobei die Polyelektrolyt-Mehrfachschichten mindestens ein Schichtpaar kationischer Polymere und anionischer Polymere umfassen und die Anzahl der Schichtpaare 1 bis 1000, vorzugsweise 2 bis 100, und noch bevorzugter 5 bis 60 beträgt.

6. Ein Verfahren gemäß einem der vorergehenden Ansprüche, wobei die Polyelektrolyt-Mehrfachschichten ferner Polymere mit verschiedenen funktionellen Gruppen umfassen können, die aus kationischen, anionischen und neutralen Polymeren ausgewählt werden.

7. Ein Verfahren gemäß einem der vorhergehenden Ansprüche, wobei die Polyelektrolyt-Mehrfachschichten ferner eine Vielfalt an Materialien umfassen, die aus synthetischen Polyionen, Biopolymeren, zum Beispiel DNA, DNA, Kollagen, Peptiden, Proteinen und Enzymen, Zellen, Viren, Dendrimeren, Kolloiden, anorganischen und organischen Teilchen, Farbstoffen, Vesikeln, Nano- (oder Mikro-) -Kapseln, Nano-(oder Mikro-) -Teilchen, Polyelektrolytkomplexen, freien oder komplex gebundenen Medikamenten, Cyclodextrinen und Mischungen davon ausgewählt werden.

8. Ein Verfahren gemäß einem der vorhergehenden Ansprüche, wobei die N-Hydroxysuccinimidverbindung N-Hydroxysulfosuccinimid ist.

9. Ein Verfahren zum Beschichten einer Oberfläche, umfassend: (1) aufeinanderfolgendes Abscheiden von abwechselnden Schichten von Polyelektrolyten auf eine Oberfläche, um eine beschichtete Oberfläche bereitzustellen, die komplementäre reaktive Gruppen, nämlich Aminogruppen und Carboxylgruppen umfasst, wobei ein erstes (oder wechselweise ein zweites) Polymer ein kationisches Polyelektrolyt ist und ein zweites (oder wechselweise ein erstes) Polymer ein anionisches Polyelektrolyt ist, und (2) Umsetzen der komplementären reaktiven Gruppen der beschichteten Oberfläche durch Implementieren des Verfahrens gemäß irgendeinem der vorhergehenden Ansprüche.

10. ein Verfahren gemäß Anspruch 9, wobei das Abscheiden von abwechselnden Schichten von Polyelektrolyten auf eine Oberfläche das Eintauchen, Tauch-ßeschichten, Spülen, Tausch-Spülen, Sprühen, Tintenstrahldrucken, Prägen, Drucken und Mikrokontaktdrucken, Wischen, Rakeln oder Rotationsbeschichten umfasst.

11. Ein Verfahren gemäß einem der vorhergehenden Ansprüche 9 bis 10, wobei der Abscheidungsvörgang Beschichtungs- und Spülschritte beinhaltet.

12. Ein Verfahren gemäß irgendeinem der Ansprüche 9 bis 11, wobei die beschichtete Oberfläche ferner eine Vielfalt an Materialien umfasst, die aus synthetischen Polyionen, Biopolymeren, zum Beispiel DNA, RNA, Kollagen, Peptiden, Proteinen und Enzymen, Zellen, Viren, Dendrimeren, Kolloiden, anorganischen oder organischen Teilchen, Farbstoffen, Vesikeln, Nano- (Mikro-) -Kapseln und Nano- (Mikro-) -Teilchen, Polyelektrolytkomplexen, freien oder komplex gebundenen Medikamenten, Cyclodextrinen und Mischungen davon ausgewählt werden.

13. Ein Artikel, der durch ein Verfahren gemäß irgendeinem der Ansprüche 9 bis 12 beschichtet ist.

14. Ein beschichteter Artikel gemäß Anspruch 13, wobei der beschichtete Artikel biokompatibel ist.

15. Ein beschichteter Artikel gemäß Anspruch 13 oder 14, wobei der Artikel aus der Gruppe bestehend aus Blutgefäß-Stents, Angioplastie-Ballons, Gefäßtransplantathülsen, Blutgefäßprothesen, Gefäßableitungen, Herzklappen, künstlichen Herzkomponenten, Schrittmachern, Schrittmacherelektroden, Schrittmacherleitungen, ventrikulären Unterstützungsvorrichtungen, Kontaktlinsen, Intraokularlinsen, Schwämmen für die Gewebekonstruktion, Schaumstoffen für die Gewebekonstruktion, Matrizen für die Gewebekonstruktion, Gerüsten für die Gewebekonstruktion, biomedizinischen Membranen, Dialysemembranen, zellverkapselungsmembranen, Medikamentenabgabegefäßen, Medükamentenabgabematrizen, Medikamentenabgabepumpen, Kathetern, Schläuchen, Prothesen für plastische Chirurgie, orthopädischen Prothesen, Zahnprothesen, Knochen- und Zahnimplantaten, Wundauflage, Nahtmaterialien, Weichgewebe-Ausbesserungsnetzen, perkutanen Vorrichtungen, Diagnose-Biosensoren, Zell-Arrays, zellulären Netzen, Mikrofluidvorrichtungen und Protein-Arrays ausgewählt ist.

## Revendications

1. Procédé de préparation de films multicouches de polyélectrolytes réticulés ayant une épaisseur de 20 nm à 150 µm, ledit procédé comprenant la réaction de groupes fonctionnels complémentaires : groupes carboxyliques et groupes amino, présents dans les polymères qui constituent le film multicouche, en la présence d'un agent de couplage et en la présence de composés de N-hydroxysuccinimide, afin de former des liaisons amide, dans lequel lesdits polymères qui constituent le film multicouche sont constitués de polymères anioniques comprenant lesdits groupes carboxyliques et de polymère cationiques comprenant lesdits groupes amino, et dans lequel lesdits polymères anioniques sont choisis dans le groupe constitué par l'acide polyacrylique, l'acide polyméthacrylique, le poly(acide D,L-glutamique), l'acide polyuronique, les glycosaminoglycanes, le poly(acide D,L-aspartique) et les mélanges de ceux-ci, et lesdits polymères cationiques sont choisis dans le groupe constitué par la poly(D,L-lysine), le poly(chlorure de diallyldiméthylammonium), le poly(allylamine), le poly(ethyléne)imine, le chitosane, la poly(L-arginine), la poly(ornithine), la poly(D,L-histidine), le poly(mannoseamine) et les mélanges de ceux-ci,
dans lequel ledit agent de couplage est un 1-éthyl-3-(3-diméthylaminopropyl)carbodiimide (EDC).

2. Procède selon la revendication 1, dans lequel les multicouches de polyélectrolytes utilisées sont assemblées par le biais de n'importe quelle interaction complémentaire, en particulier, l'attraction électrostatique et la formation de ponts hydrogène.

3. Procédé selon l'une des revendications précédentes, dans lequel les films multicouches de polyélectrolytes sont biocompatibles.

4. Procédé selon l'une des revendications précédentes, dans lequel lesdites multicouches de polyélectrolytes comprennent au moins une paire de couches de polymères cationiques et de polymères anioniques.

5. Procédé selon l'une des revendications précédentes, dans lequel lesdites multicouches de polyélectrolytes comprennent au moins une paire de couches de polymères cationiques et de polymères anioniques et le nombre desdites paires de couches va de 1 à 1000, de préférence, de 2 à 100, de manière davantage préférée, de 5 à 60.

6. Procédé selon l'une des revendications précédentes, dans lequel lesdites multicouches de polyélectrolytes peuvent en outre comprendre des polymères de groupes fonctionnels différents choisis parmi les polymères cationiques, anioniques et neutres.

7. Procédé selon l'une des revendications précédentes, dans lequel lesdites multicouches de polyélectrolytes comprennent en outre une variété de matériaux choisis parmi les polyions synthétiques, les biopolyméres tels que l'ADN, l'ARN, le collagène, les peptides, les protéines, et les enzymes, les cellules, les virus, les dendrimères, les les particules inorganiques et organiques, les colorants, les vésicules, les nano(ou micro)capsules, les nano(ou micro)particules, les complexes de polyélectrolytes, les médicaments libres ou complexés, les cyclodextrines et les mélanges de ceux-ci.

8. Procédé selon l'une des revendications précédentes, dans lequel le composé N-hydroxysuccinimide est un N-hydroxysulfo succinimide.

9. Procédé de revêtement d'une surface, consistant à (1) déposer en séquence sur une surface des couches alternées de polyélectrolytes pour fournir une surface revêtue présentant des groupes réactifs complémentaires : groupes amino et carboxyliques, dans lequel un premier (ou à l'inverse, un second) polymère est un polyélectrolyte cationique et un second (ou à l'inverse, un premier) polymère est un polyélectrolyte anionique et (2) faire réagir lesdits groupes réactifs complémentaires de la surface revêtue en mettant en oeuvre le procédé selon l'une quelconque des revendications précédentes.

10. Procédé selon la revendication 9, dans lequel le dépôt sur une surface de couches alternées de polyélectrolytes comprend l'immersion, le revêtement par immersion, le rinçage, le rinçage par immersion, la pulvérisation, l'impression par jet d'encre, l'estampage, l'impression et l'impression par microcontact, l'essuyage, le raclage ou l'application par centrifugation.

11. Procède selon l'une des revendications 9 et 10 précédentes, dans lequel le processus de dépôt implique des étapes de revêtement et de rinçage.

12. Procédé selon l'une quelconque des revendications 9 à 11, dans lequel la surface revêtue comprend en outre une variété de matériaux choisis parmi les polyions synthétiques, les biopolymères tels que l'ADN, l'ARN, le collagène, les peptides, les protéines, et les enzyme, les cellules, les virus, les dendrimères, les colloïdes, les particules inorganiques et organiques, les colorants, les vésicules, les nano(micro)capsules et les nano(micro)particules, les complexes de polyélectrolytes, les médicaments libres ou complexes, les cyclodextrines et les mélanges de ceux-ci.

13. Article revêtu grâce à un procédé selon l'une quelconque des revendications 9 à 12.

14. Article revêtu selon la revendication 13, ledit article revêtu étant biocompatible..

15. Article revêtu selon la revendication 13 ou 14, ledit article étant choisi dans le groupe constitué par les endoprothèses de vaisseaux sanguins, les ballonnets d'angioplastie, les tubulures de greffe vasculaire, les vaisseaux sanguins prothétiques, les dérivations vasculaires, les valvules cardiaques, les composants cardiaques artificiels, les stimulateurs cardiaques, les électrodes de stimulateur cardiaque, les fils conducteurs de stimulateur cardiaque, les dispositifs d'assistance ventriculaire, les lentilles de contact, les lentilles intraoculaires, les éponges de génie tissulaire, les mousses de génie tissulaire, les matrices de génie tissulaire, les échafaudages de génie tissulaire, les membranes biomédicales, les membranes de dialyse, les membranes d'encapsulation cellulaire, les réservoirs d'administration de médicament, les matrices d'administration de médicament, les pompes d'administration de médicament, les cathéters, les tubulures, les prothèses de chirurgie esthétique, les prothèses orthopédiques, les prothèses dentaires, les implants osseux et dentaire, les pansements pour plaies, les sutures, les mèches réparatrices de tissus mous, les dispositifs percutanés, les biocapteurs de diagnostic, les matrices cellulaires, les réseaux cellulaires, les dispositifs microfluidiques et les microréseaux de protéines.
